(19) Europäisches Patentamt
European Patent Office
Office européen des brevets

(11) **EP 4 546 219 A1**

(12) **EUROPEAN PATENT APPLICATION**
published in accordance with Art. 153(4) EPC

(43) Date of publication:
**30.04.2025 Bulletin 2025/18**

(21) Application number: **23838665.0**

(22) Date of filing: **21.06.2023**

(51) International Patent Classification (IPC):
**G06N 3/08** (2023.01)

(52) Cooperative Patent Classification (CPC):
**G06N 3/0464; G06N 3/048; G06N 3/0495;
G06N 3/08; G06N 3/084**

(86) International application number:
**PCT/CN2023/101719**

(87) International publication number:
**WO 2024/012171 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.07.2022 CN 202210836913**

(71) Applicant: **Huawei Technologies Co., Ltd.
Shenzhen, Guangdong 518129 (CN)**

(72) Inventors:
• **CHEN, Xinghao**
  **Shenzhen, Guangdong 518129 (CN)**
• **TU, Zhijun**
  **Shenzhen, Guangdong 518129 (CN)**
• **WANG, Yunhe**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **BINARY QUANTIZATION METHOD, NEURAL NETWORK TRAINING METHOD, DEVICE AND STORAGE MEDIUM**

(57) This application provides a binary quantization method, a neural network training method, a device, and a storage medium. The binary quantization method includes: determining to-be-quantized data in a neural network; determining a quantization parameter corresponding to the to-be-quantized data, where the quantization parameter includes a scaling factor and an offset; determining, based on the scaling factor and the offset, a binary upper limit and a binary lower limit corresponding to the to-be-quantized data; and performing binary quantization on the to-be-quantized data based on the scaling factor and the offset, to quantize the to-be-quantized data into the binary upper limit or the binary lower limit. In the method, generation of a final binary set through binary quantization is controlled by using an adaptive scaling factor and offset. Full-precision to-be-quantized data is quantized into any binary value to flexibly adapt to different data distributions. This can improve a capability of expressing a binarily quantized feature, to improve performance of a binarized neural network.

An electronic device obtains a first weight parameter in a convolutional neural network — S601

The electronic device determines a quantization parameter corresponding to the first weight parameter, where the quantization parameter includes a scaling factor and an offset — S602

The electronic device determines, based on the scaling factor and the offset, a binary upper limit and a binary lower limit corresponding to the first weight parameter — S603

The electronic device performs binary quantization on the first weight parameter based on the scaling factor and the offset, to quantize the first weight parameter into the binary upper limit or the binary lower limit — S604

FIG. 6

**Description**

This application claims priority to Chinese Patent Application No. 202210836913.1, filed with the China National Intellectual Property Administration on July 15, 2022 and entitled "BINARY QUANTIZATION METHOD, NEURAL NETWORK TRAINING METHOD, DEVICE, AND STORAGE MEDIUM", which is incorporated herein by reference in its entirety.

**TECHNICAL FIELD**

This application relates to the technical field of machine learning, and in particular, to a binary quantization method, a neural network training method, a device, and a storage medium.

**BACKGROUND**

In recent years, deep neural networks (Deep Neural Networks, DNNs) have been applied to various tasks, such as computer vision, natural language processing, and speech recognition, due to their powerful feature learning capabilities. To further improve model accuracy, a model structure is designed to be increasingly complex, and a single model has a growing demand for memory and computing resources, making model deployment on a mobile terminal and an embedded terminal extremely difficult. Therefore, a large quantity of techniques are proposed for compressing and accelerating neural networks, including low-rank decomposition, pruning, quantization, and knowledge distillation. The quantization method has received wide attention because it can significantly reduce memory occupied by a network and achieve lower energy consumption and latency by reducing a quantity of bits representing each parameter.

A binarized neural network (Binarized Neural Network, BNN) is a special application of the quantization method. It uses 1 bit to represent both a weight and an intermediate feature in a model, and replaces floating-point multiplication and summation operations in a conventional neural network with xnor (xnor) and popcount (popcount) bit operations, respectively. This can achieve dozens of times of inference acceleration and memory saving. Existing binarized neural networks generally use a sign function to binarily quantize a weight and an intermediate feature into a fixed value, such as {-1, +1}. For example, Rastegari et al. proposed a new binary quantization method that minimizes a quantization error, Qin et al. proposed a two-step quantization method that minimizes a weight quantization error and an information entropy loss and an approximate gradient-based progressive training method, Liu et al. proposed a new network structure that explicitly learns a shape and an offset of an intermediate feature. Wang et al. proposed a new binary quantization method that induces an intermediate feature to be sparse and then quantizes the intermediate feature to a set {0,+1} by using a trainable threshold. However, these methods quantize floating-point numbers with different distributions into a fixed binary set. Consequently, an expression capability of the binarized neural network is significantly limited, and accuracy varies greatly, resulting in limited application of the binarized neural network to more complex tasks, such as object detection, semantic segmentation, and object tracking.

**SUMMARY**

Some implementations of this application provide a binary quantization method, a neural network training method, a device, and a storage medium. The following describes this application from a plurality of aspects. For implementations and beneficial effect of the following plurality of aspects, refer to each other.

According to a first aspect, an implementation of this application provides a binary quantization method, applied to an electronic device. The method includes:

obtaining to-be-quantized data in a neural network;
determining a quantization parameter corresponding to the to-be-quantized data, where the quantization parameter includes a scaling factor and an offset;
determining, based on the scaling factor and the offset, a binary upper limit and a binary lower limit corresponding to the to-be-quantized data; and
performing binary quantization on the to-be-quantized data based on the scaling factor and the offset, to quantize the to-be-quantized data into the binary upper limit or the binary lower limit.

According to implementations of this application, an adaptive binary quantization method is provided to remove a limitation that a value range obtained after binary quantization is limited to {0, +1} or a fixed binary set of a pair of opposite numbers. Generation of a final binary set through binary quantization is controlled by using an adaptive scaling factor and offset. Full-precision to-be-quantized data (including a weight parameter and an intermediate feature) is quantized into any binary value to flexibly adapt to different data distributions. This can improve a capability of expressing a binarily quantized feature, to improve an expression capability of a binarized neural network, effectively improve performance of the binarized neural network with small increases in a computation amount and a parameter quantity, and facilitate promotion and application of the binarized neural network in different tasks.

In some implementations, the to-be-quantized data is a first weight parameter in the neural network.

The determining a quantization parameter corresponding to the first weight parameter includes:

determining a corresponding mean and standard deviation based on data distributions of weight parameters in the neural network;

using the mean as an offset corresponding to the first weight parameter; and

determining, based on the standard deviation, a scaling factor corresponding to the first weight parameter.

In some implementations, the binary upper limit is a sum of the scaling factor and the offset.

The binary lower limit is a sum of the offset and an opposite number of the scaling factor.

According to implementations of this application, for the weight parameter, an analytical solution of the scaling factor and the offset corresponding to the weight parameter may be obtained by minimizing a KL divergence (Kullback-Leibler Divergence) between a full-precision weight parameter and a binary weight parameter. Adaptively determining the scaling factor and the offset based on an original data distribution to determine an optimal binary set can remove a constraint of a fixed binary set, to obtain an optimal binary weight that is adaptively corrected with the data distribution. In this way, data obtained after binary quantization can adapt to different original distributions and a capability of expressing a binary feature can be enhanced.

In some implementations, the to-be-quantized data is an intermediate feature in the neural network.

An offset and a scaling factor corresponding to the intermediate feature used as the to-be-quantized data are obtained from the neural network.

According to implementations of this application, for the intermediate feature, both an offset and an amplitude of a distribution of the intermediate feature are considered. A learnable scaling factor and offset are introduced into the neural network, and may be updated through gradient optimization in a model training process and are fixed in a forward inference process. In comparison with a sign function, richer texture features can be provided, to further improve precision of the binarized neural network.

In some implementations, the performing binary quantization on the to-be-quantized data based on the scaling factor and the offset includes:

calculating a difference between the to-be-quantized data and the offset, and determining a ratio of the difference to the scaling factor;

comparing the ratio with a preset quantization threshold to obtain a comparison result; and

converting the to-be-quantized data into the binary upper limit or the binary lower limit based on the comparison result.

According to implementations of this application, a new binary quantizer is provided to binarily quantize the weight parameter and the intermediate feature in the neural network into an adaptive binary set. This is easy to operate, reduces a demand for power consumption, memory, and other computing resources, and helps improve overall performance.

According to a second aspect, an implementation of this application provides a neural network training method, applied to an electronic device. The method includes:

obtaining a to-be-trained neural network and a corresponding training dataset;

alternately performing a forward propagation process and a backward propagation process of the neural network for the training dataset, to adjust a parameter of the neural network until a loss function corresponding to the neural network converges; where

binary quantization is performed on to-be-quantized data in the neural network by using the binary quantization method provided in any implementation of the first aspect of this application in the forward propagation process, to obtain a corresponding binarized neural network, and the forward propagation process is performed based on the binarized neural network; and

determining, as a trained neural network, a binarized neural network corresponding to the neural network when the loss function converges.

According to implementations of this application, an adaptive binary quantization method is used. Generation of a final binary set through binary quantization is controlled by using an adaptive scaling factor and offset. Full-precision to-be-quantized data (including a weight parameter and an intermediate feature) is quantized into any binary value to flexibly adapt to different data distributions. This can improve a capability of expressing a binarily quantized feature, to improve an expression capability of a binarized neural network, improve precision of the binarized neural network with small increases in a computation amount and a parameter quantity, effectively reduce a performance difference between the binarized neural network and a full-precision neural network, and help further extend the binarized neural network to more complex tasks.

In addition, the trained neural network according to implementations of this application is a binarized neural network having a quantized weight parameter. This can reduce a size of a model, a demand for storage and memory bandwidth, and computing costs, so that the trained neural network can be deployed in a device with limited resources, to facilitate application of the neural network to an edge computing device.

In some implementations, the neural network uses a Maxout function as an activation function.

The method further includes:

determining, in the backward propagation process, a first gradient of the loss function for a parameter in the Maxout function, and adjusting the parameter in the Maxout function based on the first gradient.

According to implementations of this application, the Maxout function is used as the activation function in the neural network. This can further enhance a nonlinear/expression capability of the network. In addition, a learnable parameter is added to each of a positive semi-axis and a negative semi-axis of the Maxout function and may be updated through gradient optimization in a model training process, so that the Maxout function has a stronger nonlinear capability. This can further enhance a feature learning capability of the network.

In some implementations, the to-be-quantized data includes weight parameters and an intermediate feature in the neural network.

The method further includes:

determining, based on the first gradient in the backward propagation process, a second gradient of the loss function for each of the weight parameters and a third gradient of the loss function for a quantization parameter corresponding to the intermediate feature; and

adjusting each of the weight parameters in the neural network based on the second gradient and the quantization parameter corresponding to the intermediate feature in the neural network based on the third gradient.

According to implementations of this application, each weight parameter in the neural network and the quantization parameter corresponding to the intermediate feature in the neural network may be updated through gradient optimization in a model training process, to complete training of the neural network. This can improve training effect of the neural network and ensure that the trained neural network has high accuracy.

According to a third aspect, an implementation of this application provides an electronic device, including: a memory, configured to store instructions for execution by one or more processors of the electronic device; and the processor, where when the processor executes the instructions in the memory, the electronic device is enabled to perform the binary quantization method according to any implementation of the first aspect of this application or the neural network training method according to any implementation of the second aspect of this application. For beneficial effect that can be achieved in the third aspect, refer to beneficial effect of any implementation of the first aspect of this application or beneficial effect of any implementation of the second aspect of this application. Details are not described herein again.

According to a fourth aspect, an implementation of this application provides a computer-readable storage medium. The computer-readable storage medium stores instructions. When the instructions are executed on a computer, the computer is enabled to perform the binary quantization method according to any implementation of the first aspect of this application or the neural network training method according to any implementation of the second aspect of this application. For beneficial effect that can be achieved in the fourth aspect, refer to beneficial effect of any implementation of the first aspect of this application or beneficial effect of any implementation of the second aspect of this application. Details are not described herein again.

## BRIEF DESCRIPTION OF DRAWINGS

FIG. 1 is a diagram of a structure of a convolutional neural network according to an embodiment of this application;

FIG. 2 is an application diagram of a binarized neural network according to an embodiment of this application;

FIG. 3 is a diagram of a binary quantization method according to some embodiments;

FIG. 4 is a diagram of a structure of an electronic device according to an embodiment of this application;

FIG. 5 is a block diagram of a software structure of an electronic device according to an embodiment of this application;

FIG. 6 is a schematic flowchart of a binary quantization method according to an embodiment of this application;

FIG. 7a and FIG. 7b are diagrams of a new binary quantizer according to an embodiment of this application;

FIG. 7c is a diagram of a binary quantizer corresponding to a weight parameter according to an embodiment of this application;

FIG. 7d is a diagram of a binary quantizer corresponding to an intermediate feature according to an embodiment of this application;

FIG. 8 is a diagram of a binary quantization result of an intermediate feature according to an embodiment of this application;

FIG. 9 is a schematic flowchart of a neural network training method according to an embodiment of this application;

FIG. 10 is a diagram of an accelerated operation through bit operations according to an embodiment of this application;

FIG. 11 is a diagram of a nonlinear function according to an embodiment of this application;

FIG. 12 is a comparison diagram of speed testing results obtained through Bolt according to an embodiment of this application;

FIG. 13 is a comparison diagram of top-1 accuracy according to an embodiment of this application;

FIG. 14 is a diagram of a structure of a binary quantization apparatus according to an embodiment of this application; and

FIG. 15 is a diagram of a structure of a neural network training apparatus according to an embodiment of this application.

## DESCRIPTION OF EMBODIMENTS

Illustrative embodiments of this application include but are not limited to a binary quantization method, a neural network training method, a device, and a storage medium.

The following clearly and completely describes the technical solutions in embodiments of this application with reference to the accompanying drawings in embodiments of this application. To more clearly understand the solutions in embodiments of this application, the following first briefly describes terms in this application.

Neural network: It is a complex network system formed by a large quantity of processing units (referred to as neurons) that are widely connected to each other. The neural network is the core of artificial intelligence and belongs to a branch of artificial intelligence. The neural network is widely used in various fields, such as data mining, data classification, computer vision, natural language processing, biometric recognition, search engines, medical diagnosis, securities market analysis, DNA sequencing, speech and handwriting recognition, strategic games, and robotics. The neural network includes but is not limited to a convolutional neural network (Convolutional Neural Network, CNN), a recurrent neural network (Recurrent Neural Network, RNN), a deep neural network, or the like.

Convolutional neural network: It is a neural network having a plurality of neural network layers. Each neural network layer includes a plurality of two-dimensional planes. Each plane includes a plurality of independent neurons. The plurality of neurons on each plane share a weight. A quantity of parameters in the neural network can be reduced through weight sharing. Currently, in the convolutional neural network, a convolutional operation performed by a processor is usually as follows: converting convolution of an input signal feature and a weight parameter into a matrix multiplication operation between a feature map matrix and a weight parameter matrix.

Binarized neural network: It is a neural network obtained by representing both a weight parameter and an intermediate feature of a floating-point neural network with 1 bit. The binarized neural network has a same structure as the floating-point neural network, and mainly has gradient descent, weight update, and convolutional operations optimized.

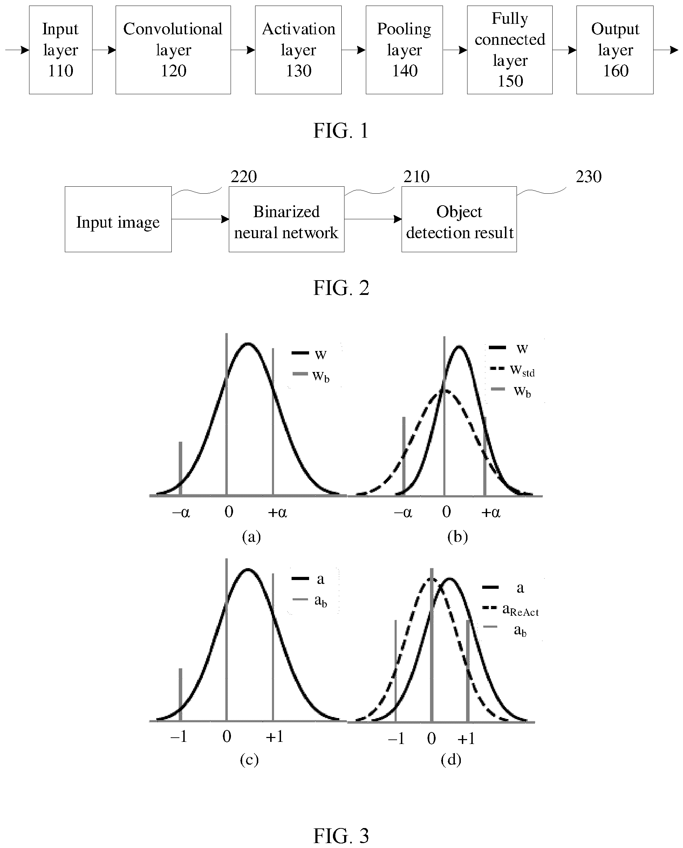

For example, FIG. 1 is a diagram of a structure of a convolutional neural network according to an embodiment of this application. As shown in FIG. 1, the convolutional neural network includes an input layer 110, a convolutional layer 120, an activation layer 130, a pooling layer 140, a fully connected layer 150, and an output layer 160. The convolutional layer 120 performs feature extraction on input data (namely, an intermediate feature), to obtain a plurality of feature maps. The convolutional layer 120 includes a plurality of convolution kernels. Each element that forms the convolution kernel corresponds to one weight parameter and one deviation. When the convolution kernel works, it regularly scans the input data, performs matrix element multiplication and summation on the input data in a receptive field, and adds the deviation. The activation layer 130 may be configured to activate the feature maps output by the convolutional layer 120, to improve an operation speed of a subsequent layer. The pooling layer 140 may perform feature selection and information filtering on feature maps output by the activation layer 130, to convert the feature maps into fixed-size feature maps. The fully connected layer 150 may be configured to nonlinearly combine the feature maps output by the pooling layer 140 to obtain output. The fully connected layer 150 is not expected to have a feature extraction capability, but attempts to accomplish a learning objective by using an existing higher-order feature. The output layer 160 may be configured to output a final result according to a logical function or a normalized exponential function.

The convolutional neural network shown in FIG. 1 may be applied to issues such as image classification, and object detection. For the image classification, the output layer 160 may output a classification label. The classification label may include scenery, human, animal, or the like. For the object detection, the output layer 160 may output a classification label and a region of interest that correspond to a detected object. It should be understood that input data or output data of each neural network layer of the neural network may be a matrix, a tensor, a vector, or the like. This is not limited in embodiments of this application.

Logically, the convolutional neural network generally includes a plurality of convolutional layers. Each convolutional layer has a corresponding convolutional model (the convolutional model may be understood as a computation model). In other words, each convolutional layer has a corresponding weight parameter. For example, the convolutional model of the $i^{th}$ convolutional layer (the $i^{th}$ convolutional layer is a concept of a logical convolutional layer) in the convolutional neural network may mainly include a model expressed as formula (1):

$$c_i = Conv(w_i, a_i) \qquad\qquad (1)$$

$w_i$ represents the weight parameter of the $i^{th}$ convolutional layer. $a_i$ represents input data (namely, an intermediate feature) of the $i^{th}$ convolutional layer. $Conv(x, y)$ represents a convolutional operation. A convolution result $c_i$ of the $i^{th}$ convolutional layer may be obtained according to formula (1).

In actual application, to reduce complexity of neural networks, a large quantity of techniques are proposed for compressing and accelerating the neural networks, including low-rank decomposition, pruning, quantization, and knowledge distillation. The quantization method has received wide attention because it can significantly reduce memory occupied by a network and achieve lower energy consumption and latency by reducing a quantity of bits representing each parameter.

For example, for the convolutional neural network, a weight parameter and an intermediate feature of a convolutional layer may be quantized, and a convolutional operation is performed by using obtained quantized data. This can greatly reduce a computation amount and a parameter quantity of the network and significantly improve an operation speed of the network. For example, when a quantization operation is performed on the convolutional model of the $i^{th}$ convolutional layer in the convolutional neural network, the weight parameter $w_i$ and the intermediate feature $a_i$ may be first quantized to obtain corresponding quantized data $w_b$, $a_b$, and then a convolutional operation result of the quantized data $w_b$, $a_b$ is directly calculated.

Binary quantization is 1-bit quantization, and its data has only two possible values. After the neural network is compressed through binary quantization, both the weight parameter and the intermediate feature in the network can be represented by 1 bit without occupying too much memory. In addition, a binarized neural network obtained through binary quantization may replace floating-point multiplication and summation operations in a floating-point neural network with lightweight xnor and popcount bit operations, respectively. This can achieve dozens of times of inference acceleration and memory saving.

In actual application, due to huge transmission and storage costs of massive videos, an embedded computing platform makes an intelligent terminal device continuously intelligent, so that all or partial offline computing can be performed locally. This can greatly reduce pressure of a data center. The binarized neural network obtained after binary quantization is applied the intelligent terminal device, to process a video or an image shot by a camera. This can greatly reduce computational complexity and space complexity of an algorithm while maintaining high precision, to improve a task processing speed of the intelligent terminal device. The intelligent terminal device may be a smart camera, a smartphone, a robot, an in-vehicle terminal, a selfdriving vehicle, or the like. It should be understood that a specific form of the intelligent terminal device is not limited in embodiments of this application.

For example, FIG. 2 is an application diagram of a binarized neural network according to an embodiment of this application. As shown in FIG. 2, a binarized neural network 210 in embodiments of this application may be applied to the object detection field. Input data of the binarized neural network 210 may be an input image 220. Output data of the binarized neural network 210 may be an object detection result 230 in the input image.

It should be understood that based on different network structures, the binarized neural network in embodiments of this application may be further applied to fields such as large-scale image classification, semantic segmentation, and object tracking in an edge computing scenario. In actual application, a structure of and content processed by the binarized neural network are not specifically limited in embodiments of this application. For example, with increasing popularity of an unmanned aerial vehicle and an unmanned delivery vehicle, power consumption and memory required for running of such an intelligent terminal having an independent computing capability can be further reduced by applying the binarized neural network to the intelligent terminal.

FIG. 3 is a diagram of a binary quantization method according to some embodiments. As shown in FIG. 3(a), in a binary quantization method according to some embodiments, a weight parameter $w$ may be binarily quantized into $\{-\alpha, +\alpha\}$ by using a sign function $sign(x)$. That is, all numbers less than 0 are set to $-\alpha$, and all numbers greater than or equal to 0 are set to $+\alpha$. $\alpha$ is obtained by calculating an L1 norm of each channel. Therefore, the original weight parameter $w$ is binarily quantized into a binary weight parameter $w_b$ in the figure. It should be understood that the foregoing binary quantization method does not consider an offset and an amplitude of the weight parameter, resulting in a large quantization error.

As shown in FIG. 3(b), in another binary quantization method according to some embodiments, to minimize a quantization error and an information entropy loss, an original weight parameter $w$ is first standardized. That is, a mean is subtracted from the weight parameter, and then the difference is divided by a standard deviation. In this way, a standardized weight parameter $w_{std}$ is obtained. Then, the standardized weight parameter $w_{std}$ is binarily quantized into $\{-\alpha, +\alpha\}$ by using a sign function $sign(x)$. That is, all numbers less than 0 are set to $-\alpha$, and all numbers greater than or equal to 0 are set to $+\alpha$. $\alpha$ is obtained by calculating an L1 norm of each channel. In FIG. 3(b), a solid line represents a data distribution of the original weight parameter w, and a dashed line represents a data distribution of the standardized weight parameter $w_{std}$. The standardized weight parameter $w_{std}$ is binarily quantized into a binary weight parameter $w_b$ in the figure by using the sign function. Therefore, the original weight parameter $w$ is binarily quantized into the binary weight parameter $w_b$ in the figure. For specific content of the foregoing binary quantization method, refer to specific descriptions in the paper "Forward and Backward Information Retention for Accurate Binary Neural Networks" (Haotong Qin and Ruihao Gong. CVPR, 2020). Details are not described herein in embodiments of this application.

It should be understood that standardization in the foregoing binary quantization method makes the weight parameter tend to obey a standard normal distribution. This limits adaptive update of the weight parameter in a training process. In addition, although the finally obtained binary weight parameter can reach a maximum information entropy, there is a large quantization loss in comparison with the original weight parameter.

As shown in FIG. 3(c), in another binary quantization method according to some embodiments, an intermediate feature $a$ may be binarily quantized into $\{-1, +1\}$ by using a sign function $sign(x)$. That is, all numbers less than 0 are set to -1, and all numbers greater than or equal to 0 are set to +1. Therefore, the original intermediate feature $a$ is binarily quantized into an intermediate feature $a_b$ in the figure. It should be understood that the foregoing binary quantization method does not consider an offset and an amplitude of the intermediate feature, and the intermediate feature is directly quantized into a fixed binary set. This greatly limits an expression capability of a network and results in a large quantization error.

As shown in FIG. 3(d), in another binary quantization method according to some embodiments, an original intermediate feature $a$ is first offset to obtain an offset intermediate feature $a_{ReAct}$. Then, binary quantization is performed on the offset intermediate feature $a_{ReAct}$ by using a sign function $sign(x)$. That is, all numbers less than 0 are set to -1, and all numbers greater than or equal to 0 are set to +1, to obtain a binary intermediate feature $a_b$. An offset used to offset the intermediate feature $a$ is a learnable parameter, and is updated in a model training process. In FIG. 3(d), a solid line represents a data distribution of the original intermediate feature $a$, and a dashed line represents a data distribution of the offset intermediate feature $a_{ReAct}$. The offset intermediate feature $a_{ReAct}$ is binarily quantized into the binary intermediate feature $a_b$ in the figure by using the sign function. Therefore, the original intermediate feature $a$ is binarily quantized into the binary intermediate feature $a_b$ in the figure. For specific content of the foregoing binary quantization method, refer to specific descriptions in the paper "ReActNet: Towards Precise Binary Neural Network with Generalized Activation Functions" (Zechun Liu, Zhiqiang Shen, Marios Savvides, ECCV, 2020). Details are not described herein in embodiments of this application.

It should be understood that the foregoing binary quantization method considers only an adaptive offset of the intermediate feature and does not consider an amplitude, resulting in a large quantization error.

To resolve the foregoing problem, embodiments of this application provide a binary quantization method. The method includes: To-be-quantized data in a neural network is obtained. For example, when binary quantization is performed on the convolutional neural network shown in FIG. 1, each weight parameter of the convolutional layer 120 in the convolutional neural network and the intermediate feature (namely, input data) of the convolutional layer 120 are obtained as the to-be-quantized data.

Next, a quantization parameter corresponding to the to-be-quantized data is determined. The quantization parameter includes a scaling factor and an offset. Then, a binary upper limit and a binary lower limit corresponding to the to-be-quantized data are determined based on the scaling factor and the offset. For example, for each weight parameter of the convolutional layer 120 in the convolutional neural network, a corresponding scaling factor and offset may be calculated based on a data distribution of each weight parameter. A sum of the scaling factor and the offset is used as a corresponding binary upper limit. A sum of the offset and an opposite number of the scaling factor is used as a corresponding binary lower limit. For another example, for the intermediate feature of the convolutional layer 120 in the convolutional neural network, a corresponding offset and scaling factor may be directly obtained from the convolutional neural network. A sum of the scaling factor and the offset is used as a corresponding binary upper limit. A sum of the offset and an opposite number of the scaling factor is used as a corresponding binary lower limit.

Finally, binary quantization is performed on the to-be-quantized data based on the scaling factor and the offset, to quantize the to-be-quantized data into the binary upper limit or the binary lower limit.

It should be understood that based on the foregoing solution, embodiments of this application provide an adaptive binary quantization method, to remove a constraint of a fixed binary set. Generation of a final binary set through binary quantization is controlled by using an adaptive scaling factor and offset. Full-precision to-be-quantized data is quantized into any binary value to flexibly adapt to different data distributions. This can improve a capability of expressing a binarily quantized feature, to improve an expression capability of a binarized neural network and effectively improve performance of the binarized neural network with small increases in a computation amount and a parameter quantity.

It should be understood that in the binary quantization method provided in embodiments of this application, for a convolutional operation process, xnor and popcount bit operations may still be used to perform an accelerated operation on any binary value through simple linear transformation. Increases in an operation quantity and the parameter quantity are ignorable compared with a total computation amount and parameter quantity of a model, but a performance difference between the binarized neural network and a full-precision neural network can be further reduced. A specific acceleration process is described in detail subsequently.

It should be understood that the foregoing binary quantization method may be used for any parameter in the neural network. The neural network in embodiments of this application may be various types of neural networks, for example, a convolutional neural network, a deep belief network (Deep Belief Network, DBN), and a recurrent neural network. In actual application, a neural network to which binary quantization is applicable is not specifically limited in embodiments of this application.

It should be understood that the method provided in embodiments of this application may be implemented on various electronic devices, including but not limited to a server, a distributed server cluster formed by a plurality of servers, a mobile phone, a tablet computer, a facial recognition access control, a laptop computer, a desktop computer, a wearable device, a headmounted display, a mobile email device, a portable game console, a portable music player, a reader device, a personal digital assistant, a virtual reality or augmented reality device, a television in which one or more processors are embedded or coupled, and the like.

Before the binary quantization method provided in embodiments of this application is described in detail, a hardware structure of an electronic device is first described below.

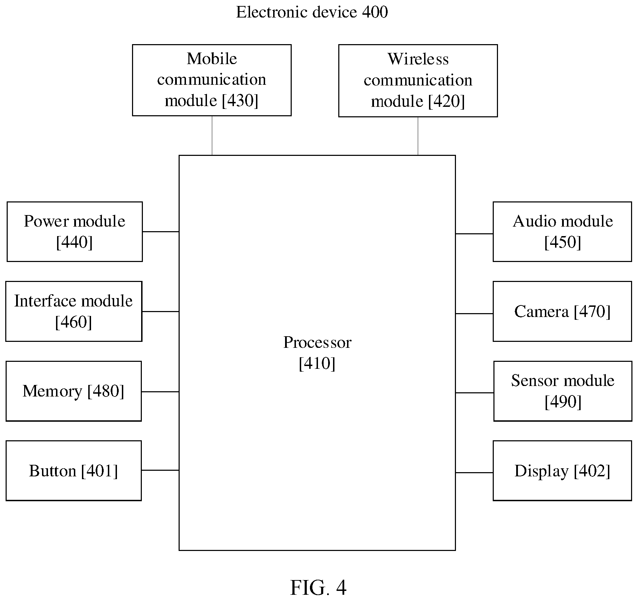

FIG. 4 is a diagram of a structure of an electronic device 400 according to an embodiment of this application. As shown in FIG. 4, a hardware structure of the electronic device 400 may include a processor 410, a wireless communication module 420, a mobile communication module 430, a power module 440, an audio module 450, an interface module 460, a camera 470, a memory 480, a sensor module 490, a button 401, a display 402, and the like.

It may be understood that the structure shown in this embodiment of this application does not constitute a specific limitation on the electronic device 400. In some other embodiments of this application, the electronic device 400 may include more or fewer components than those shown in the figure, have some components combined, have some components split, or have different component arrangements. The components shown in the figure may be implemented by hardware, software, or a combination of software and hardware.

The processor 410 may include one or more processing units, for example, may include a processing module or a processing circuit of a central processing unit CPU (Central Processing Unit), a graphics processing unit GPU (Graphics Processing Unit), a digital signal processor DSP, a micro control unit MCU (Micro-programmed Control Unit), an AI (Artificial Intelligence, artificial intelligence) processor, a programmable logic device FPGA (Field Programmable Gate Array), or the like. Different processing units may be independent components, or may be integrated into one or more processors. A storage unit may be disposed in the processor 410, and is configured to store instructions and data.

In some embodiments, the storage unit in the processor 410 is a cache. The processor 410 may be configured to perform the binary quantization method in embodiments of this application or perform the neural network training method in embodiments of this application.

The memory 480 may be configured to store computer-executable program code. The executable program code includes instructions. The memory 480 may include a program storage area and a data storage area. The program storage area may store an operating system, an application required by at least one function (for example, a sound playing function or an image playing function), and the like. The data storage area may store data (such as audio data and a phone book) created when the electronic device 400 is used, and the like. In addition, the memory 480 may include a high-speed random access memory, or may include a nonvolatile memory, for example, at least one magnetic disk storage device, a flash memory, or a universal flash storage (Universal Flash Storage, UFS). The processor 410 runs the instructions stored in the memory 480 and/or the instructions stored in the memory disposed in the processor 410, to perform various functional applications and data processing of the electronic device 400.

In some embodiments, the memory 480 may store instructions of the binary quantization method or neural network training method. The processor 410 performs binary quantization on to-be-quantized data in a neural network by running the instructions of the binary quantization method or trains a neural network by running the instructions of the neural network training method.

The power module 440 may include a power supply, a power management component, and the like. The power supply may be a battery. The power management component is configured to manage charging of the power supply and power supply of the power supply to another module. In some embodiments, the power management component includes a charging management module and a power management module. The charging management module is configured to receive charging input from a charger. The power management module is configured to connect to the power supply, the charging management module, and the processor 410. The power management module receives input from the power supply and/or the charging management module, and supplies power to the processor 410, the display 402, the camera 470, the wireless communication module 420, and the like.

The wireless communication module 420 may include an antenna, and receive/send an electromagnetic wave through the antenna. The wireless communication module 420 may provide a wireless communication solution that is applied to the electronic device 400 and that includes a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (Infrared, IR) technology, or the like. The electronic device 400 can communicate with a network and another device by using wireless communication technologies.

The mobile communication module 430 may include but is not limited to an antenna, a power amplifier, a filter, an LNA (Low Noise Amplify, low noise amplifier), and the like. The mobile communication module 430 may provide a wireless communication solution that is applied to the electronic device 400 and that includes 2G/3G/4G/5G or the like.

In some embodiments, the mobile communication module 430 and the wireless communication module 420 of the electronic device 400 may alternatively be located in a same module.

The display 402 is configured to display a human-computer interaction interface, an image, a video, and the like. The display 402 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light Emitting Diode, AMOLED), a flexible light-emitting diode (Flex Light-Emitting Diode, FLED), a mini-LED, a micro-LED, a micro-OLED, a quantum dot light-emitting diode (Quantum Dot Light Emitting Diodes, QLED), or the like.

The sensor module 490 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 450 is configured to convert digital audio information into an analog audio signal for output, or convert analog audio input into a digital audio signal. The audio module 450 may be further configured to encode and decode an audio signal. In some embodiments, the audio module 450 may be disposed in the processor 410, or some functional modules of the audio module 450 may be disposed in the processor 410. In some embodiments, the audio module 450 may include a speaker, a receiver, a microphone, and a headset jack.

The camera 470 is configured to capture a static image or a video. An optical image of an object is generated through a lens, and is projected onto a photosensitive element. The photosensitive element converts an optical signal into an electrical signal, and then transmits the electrical signal to an ISP (Image Signal Processing, image signal processor) to convert the electrical signal into a digital image signal. The electronic device 400 may implement a photographing function via the ISP, the camera 470, a video codec, the GPU (Graphic Processing Unit, graphics processing unit), the display 402, an application processor, and the like.

The interface module 460 includes an external memory interface, a universal serial bus (Universal Serial Bus, USB) interface, a subscriber identity module (Subscriber Identification Module, SIM) card interface, and the like. The external memory interface may be configured to connect to an external memory card, for example, a Micro SD card, to expand a storage capability of the electronic device 400. The external memory card communicates with the processor 410 through the external memory interface, to implement a data storage function. The universal serial bus interface is configured for communication between the electronic device 400 and another electronic device. The subscriber identity module card interface is configured to communicate with a SIM card installed in the electronic device 400, for example, read a phone number stored in the SIM card, or write a phone number into the SIM card.

In some embodiments, the electronic device 400 further includes the button 401, a motor, an indicator, and the like. The button 401 may include a volume button, a power-on/power-off button, and the like. The motor is configured to enable the electronic device 400 to generate vibration effect, for example, generate vibration when the electronic device 400 of a user is called, to prompt the user to answer a call from the electronic device 400. The indicator may include a laser indicator, a radio frequency indicator, an LED indicator, and the like.

A software system of the electronic device 400 may use a layered architecture, an eventdriven architecture, a microkernel architecture, a microservice architecture, or a cloud architecture. In embodiments of this application, an Android system with a layered architecture is used as an example to describe a software structure of the electronic device 400. A type of an operating system of the electronic device is not limited in this application, for example, an Android system, a Linux system, a Windows system, an iOS system, a Harmony Operating System (Harmony Operating System, HarmonyOS) system, or the like.

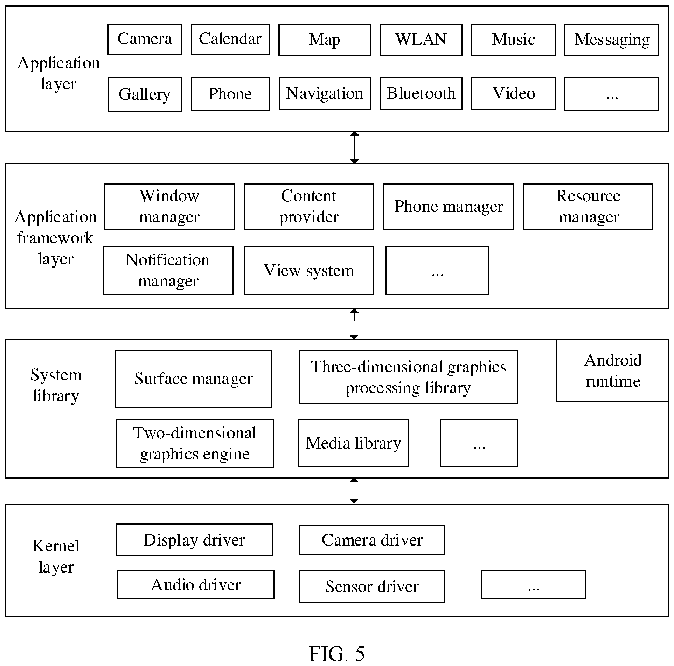

FIG. 5 is a block diagram of a software structure of an electronic device 400 according to an embodiment of this application.

In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android Runtime) and a system library, and a kernel layer.

The application layer may include a series of application packages.

As shown in FIG. 5, the application packages may include applications such as Camera, Gallery, Calendar, Phone, Map, Navigation, WLAN, Bluetooth, Music, Video, and Messaging.

The application framework layer provides an application programming interface (Application Programming Interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 400, for example, management of a call status (including answering, rejecting, or the like).

The resource manager provides various resources such as a localized character string, an icon, an image, a layout file, and a video file for an application.

The notification manager enables an application to display notification information in a status bar, and may be configured to convey a notification message. A notification may automatically disappear after a short pause without requiring a user interaction. For example, the notification manager is configured to give a download completion notification, a message notification, and the like. The notification manager may alternatively provide a notification that appears in a top status bar of the system in a form of a graph or scroll bar text, for example, a notification of an application running in the background, or provide a notification that appears on a screen in a form of a dialog window. For example, text information is displayed in the status bar, a prompt tone is made, the electronic device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (Surface Manager), a media library (Media Library), a three-dimensional graphics processing library (such as OpenGL ES), and a 2D graphics engine (such as SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The binary quantization method provided in embodiments of this application may be applied to an electronic device having the hardware structure shown in FIG. 4 and the software structure shown in FIG. 5, or an electronic device having a similar hardware structure and software structure, such as including more or fewer components than those shown in the figure, having some components combined, having some components split, or having different component arrangements.

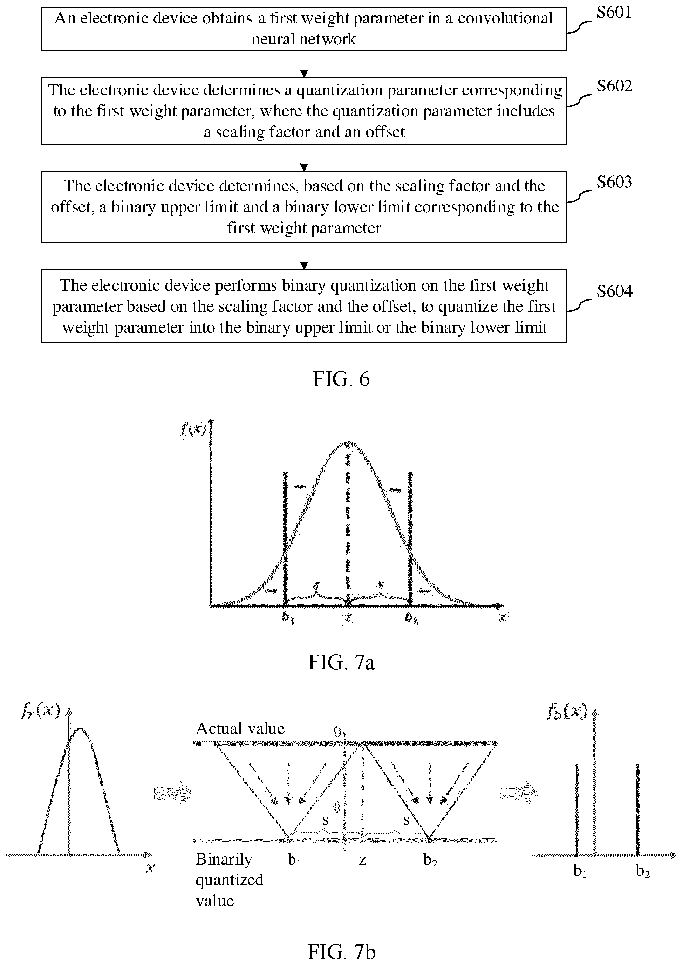

With reference to the electronic device mentioned above, the following describes in detail the binary quantization method in embodiments of this application by using a convolutional neural network as an example. FIG. 6 is a schematic flowchart of a binary quantization method according to an embodiment of this application. The method may be performed by the processor 410 in the electronic device 400. As shown in FIG. 6, the binary quantization method may include steps S601 to S604.

S601: An electronic device obtains a first weight parameter (used as an instance of to-be-quantized data) in a convolutional neural network (used as an instance of a neural network).

In embodiments of this application, the first weight parameter indicates one or more weight parameters in the convolutional neural network. In other words, the first weight parameter may be a single weight parameter, a plurality of weight parameters, or all weight parameters. This is not specifically limited in embodiments of this application. In embodiments of this application, for ease of description, it is assumed that the first weight parameter is all weight parameters of an $i^{th}$ convolutional layer in the convolutional neural network.

For example, each convolutional layer in the convolutional neural network has a corresponding convolutional model expressed as formula (1). The electronic device may obtain a weight parameter $w_i$ in a convolutional model of the $i^{th}$ convolutional layer in the convolutional neural network as the to-be-quantized first weight parameter.

It should be understood that the convolutional neural network is a floating-point convolutional neural network, and the first weight parameter in the convolutional neural network is floating-point data.

S602: The electronic device determines a quantization parameter corresponding to the first weight parameter. The quantization parameter includes a scaling factor and an offset.

**In** embodiments of this application, the quantization parameter corresponding to the first weight parameter is a coefficient used to quantize the first weight parameter. The electronic device applies the quantization parameter to a universal new binary quantizer, to determine a binary quantizer corresponding to the first weight parameter. The electronic device may perform binary quantization on the first weight parameter based on the binary quantizer to obtain a corresponding binary quantization result.

Embodiments of this application provide a universal new binary quantizer expressed as formula (2):

$$\mathcal{B}(x) = g\left(\frac{x-z}{s}\right) \times s + z \qquad (2)$$

$x$ is the to-be-quantized data. $s$ is the scaling factor. $z$ is the offset. $g(x)$ is a sign function expressed as formula (3):

$$g(x) = sign(x) = \begin{cases} +1, & x \geq 0 \\ -1, & x < 0 \end{cases} \qquad (3)$$

As shown in FIG. 7a, a set obtained after binary quantization may be represented as $\{b_1, b_2\}$, where $b_1 = -s + z$ and $b_2 = +s + z$. It can be learned that values of $b_1$, $b_2$ are determined by s and z. The binary quantizer may be directly configured to perform binary quantization on a weight parameter and an intermediate feature. As shown in FIG. 7b, left half data of an original distribution is binarized into $b_1$, and right half data into $b_2$. s and z change as the distribution changes. Therefore, a data distribution obtained after binarization also changes. A floating-point distribution can be binarized into any two numbers by controlling s and z.

The electronic device applies the foregoing binary quantizer to the first weight parameter in the convolutional neural network to obtain the binary quantizer corresponding to the first weight parameter, which is expressed as formula (4):

$$w_b = \mathcal{B}(w) = g\left(\frac{w-z_w}{s_w}\right) \times s_w + z_w \qquad (4)$$

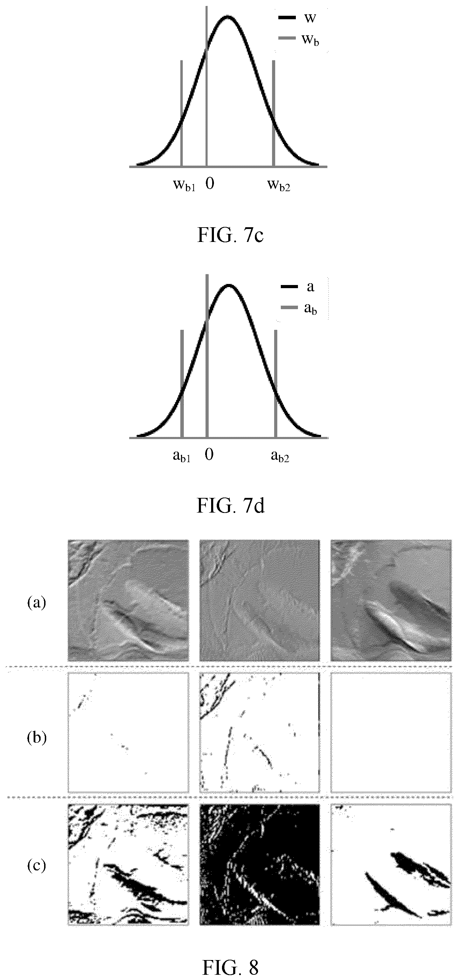

$w$ is the first weight parameter. $s_w$ is the scaling factor corresponding to the first weight parameter. $z_w$ is the offset corresponding to the first weight parameter. As shown in FIG. 7c, a corresponding set obtained after binary quantization is $\{w_{b1}, W_{b2}\} = \{-S_w + z_w, +s_w + z_w\}$.

The electronic device may determine that a KL divergence between a full-precision first weight parameter and a binarily quantized first weight parameter may be expressed as follows:

$$D_{KL}(P_r||P_b) = \sum_{i=1}^{N} P_r(x_i) \, log \frac{P_r(x_i)}{P_b(x_i)}$$

$P_r(x)$ and $P_b(x)$ are data distributions of the full-precision first weight parameter and the binarily quantized first weight parameter, respectively.

It is assumed that the weight parameter obeys a Gaussian distribution:

$$P_r(w) = \frac{1}{\sqrt{2\pi}\sigma} \exp\left(-\frac{(w-\mu)^2}{2\sigma^2}\right)$$

$\mu$ and $\sigma$ are a mean and standard deviation of the Gaussian distribution, respectively. To make the data distribution of the binarily quantized first weight parameter more balanced, its center should be aligned with a center of the data distribution of the full-precision first weight parameter. The electronic device may determine that the offset corresponding to the first weight parameter is a mean of the data distribution of the first weight parameter, which is expressed as formula (5):

$$z_w = E(w) \approx \mu \qquad (5)$$

Therefore, a probability that the binarily quantized first weight parameter is $w_{b1}$ or $w_{b2}$ is $P_b(w_{b1}) = P_b(W_{b2}) = 0.5$. The KL divergence may be expressed as follows:

$$D_{KL} = P_r(w_{b1}) log \frac{P_r(w_{b1})}{P_b(w_{b1})} + P_r(w_{b2}) log \frac{P_r(w_{b2})}{P_b(w_{b2})}$$

$$= P_r(w_{b1}) log 2 P_r(w_{b1}) + P_r(w_{b2}) log 2 P_r(w_{b2})$$

$$= \frac{1}{\sqrt{2\pi}\sigma} exp\left(-\frac{s_w^2}{2\sigma^2}\right) log \frac{2}{\sqrt{2\pi}\sigma} exp\left(-\frac{s_w^2}{2\sigma^2}\right)$$

$$= \frac{1}{\sqrt{2\pi}\sigma} exp\left(-\frac{s_w^2}{2\sigma^2}\right) \left(log \frac{2}{\sqrt{2\pi}\sigma} - \frac{s_w^2}{2\sigma^2}\right)$$

By minimizing the KL divergence, the electronic device may obtain the scaling factor corresponding to the first weight parameter, which is expressed as formula (6):

$$s_w = \sigma \sqrt{2\left(1 + log \frac{2}{\sqrt{2\pi}\sigma}\right)} \qquad (6)$$

In actual application, the electronic device may determine the scaling factor corresponding to the first weight parameter in a simplified form, which is expressed as formula (7):

$$s_w = \sigma = \frac{\|w - z_w\|_2}{\sqrt{n}} \qquad (7)$$

n is a quantity of elements of each channel in the convolutional neural network.

**In** other words, in embodiments of this application, determining the quantization parameter corresponding to the first weight parameter includes:

determining a corresponding mean and standard deviation based on the data distribution of the first weight parameter (used as an instance of weight parameters in the convolutional neural network);
using the mean as the offset corresponding to the first weight parameter; and
determining, based on the standard deviation, the scaling factor corresponding to the first weight parameter.

Specifically, after obtaining the first weight parameter $w$, the electronic device may determine, based on the data distribution of the first weight parameter $w$, the corresponding mean $\mu$ as the offset $z_w$ corresponding to the first weight parameter $w$, and then calculate the standard deviation $\sigma$ corresponding to the data distribution of the first weight parameter $w$ by using formula (7) based on the first weight parameter w and the mean $\mu$ (namely, $z_w$). Optionally, the electronic device may directly use the standard deviation $\sigma$ as the scaling factor $s_w$ corresponding to the first weight parameter $w$. Alternatively, the electronic device may calculate the scaling factor $s_w$ corresponding to the first weight parameter $w$ by using formula (6) based on the standard deviation $\sigma$.

It should be noted that when the first weight parameter is some weight parameters of a neural network layer in the convolutional neural network, the weight parameters are all weight parameters of a neural network layer corresponding to the first weight parameter in the convolutional neural network. For example, if the first weight parameter is some weight parameters of the $i^{th}$ convolutional layer in the convolutional neural network, the weight parameters in the convolutional neural network are all weight parameters of the $i^{th}$ convolutional layer in the convolutional neural network.

It should be noted that in some embodiments, when the first weight parameter includes weight parameters of a plurality of neural network layers in the convolutional neural network, binary quantization may be performed on the weight parameters of each neural network layer by using the method provided in embodiments of this application, to obtain a corresponding binary quantization result.

S603: The electronic device determines, based on the scaling factor and the offset, a binary upper limit and a binary lower limit corresponding to the first weight parameter.

Specifically, it can be learned from the foregoing analysis that the binary upper limit is a sum of the scaling factor and the offset; and the binary lower limit is a sum of the offset and an opposite number of the scaling factor. For example, the electronic device may calculate the sum of the scaling factor $s_w$ and the offset $z_w$ as the binary upper limit corresponding to the first weight parameter w; and calculate the sum of the offset $z_w$ and the opposite number of the scaling factor $s_w$ as the binary lower limit corresponding to the first weight parameter $w$.

S604: The electronic device performs binary quantization on the first weight parameter based on the scaling factor and the offset, to quantize the first weight parameter into the binary upper limit or the binary lower limit.

In embodiments of this application, the electronic device may perform binary quantization on the first weight parameter based on the binary quantizer expressed as formula (4). Specifically, after obtaining the scaling factor $s_w$ and the offset $z_w$ corresponding to the first weight parameter $w$, the electronic device may first calculate a difference $w - z_w$ between the first weight parameter $w$ and the offset $z_w$, and determine a ratio $\frac{w-z_w}{s_w}$ of the difference $w - z_w$ to the scaling factor $s_w$. The electronic device may compare the ratio $\frac{w-z_w}{s_w}$ with 0 (used as an instance of a preset quantization threshold) to obtain a comparison result, and convert the first weight parameter $w$ into the binary upper limit $+s_w + z_w$ or the binary lower limit $-s_w + z_w$ based on the comparison result. Specifically, if the comparison result is that the ratio $\frac{w-z_w}{s_w}$ is greater than or equal to 0, the first weight parameter $w$ is converted into the binary upper limit $+s_w + z_w$. If the comparison result is that the ratio $\frac{w-z_w}{s_w}$ is less than 0, the first weight parameter w is converted into the binary lower limit $-s_w + z_w$.

It should be noted that the foregoing embodiment is described by using an example in which the first weight parameter is used as the to-be-quantized data. In some embodiments, the to-be-quantized data may alternatively be an intermediate feature in the convolutional neural network. The intermediate feature may be input data of one or more neural network layers in the convolutional neural network. In other words, the intermediate feature may be input data of a single neural network layer or input data of a plurality of neural network layers. This is not specifically limited in embodiments of this application. For ease of description, it is assumed that the intermediate feature is input data of the $i^{th}$ convolutional layer in the convolutional neural network. In other words, the electronic device may alternatively obtain an intermediate feature $a_i$ input to the $i^{th}$ convolutional layer as a to-be-quantized intermediate feature.

It should be understood that the convolutional neural network is a floating-point convolutional neural network, and the intermediate feature in the convolutional neural network is floating-point data.

In some embodiments, the convolutional neural network stores a quantization parameter corresponding to the to-be-quantized intermediate feature, including an offset and a scaling factor. When using the intermediate feature as the to-be-quantized data, the electronic device may directly obtain, from the convolutional neural network, the offset and the scaling factor corresponding to the intermediate feature used as the to-be-quantized data.

Specifically, the quantization parameter corresponding to the intermediate feature is a coefficient used to quantize the intermediate feature. The electronic device applies the quantization parameter to the new binary quantizer expressed as formula (2), to determine a binary quantizer corresponding to the intermediate feature. The electronic device may perform binary quantization on the intermediate feature based on the binary quantizer to obtain a corresponding binary quantization result.

In actual application, considering that the intermediate feature in the convolutional neural network varies with input, computational complexity in a model inference process is greatly increased if a binary quantization method similar to that for the first weight parameter is used to calculate an optimal analytical solution. Therefore, a learnable offset and scaling factor are introduced into the convolutional neural network, and may be continuously adjusted in a process of training the convolutional neural network to find an optimal matching manner. The two parameters are fixed in a forward inference process. In other words, the learnable offset and scaling factor may be introduced and continue to be applied to the new binary quantizer expressed as formula (2), to obtain the binary quantizer corresponding to the intermediate feature.

Specifically, the electronic device applies the binary quantizer expressed as formula (2) to the intermediate feature in the convolutional neural network to obtain the binary quantizer corresponding to the intermediate feature, which is expressed as formula (8):

$$a_b = \mathcal{B}(a) = g\left(\frac{a - z_a}{s_a}\right) \times s_a + z_a \qquad (8)$$

$a$ is the intermediate feature. $s_a$ is the scaling factor corresponding to the intermediate feature. $z_a$ is the offset corresponding to the intermediate feature. As shown in FIG. 7d, a corresponding set obtained after binary quantization is $\{a_{b1}, a_{b2}\} = \{-s_a + z_a, +s_a + z_a\}$.

It should be noted that when the electronic device uses the intermediate feature in the convolutional neural network as the to-be-quantized data, a method for determining, by the electronic device, a binary upper limit and a binary lower limit corresponding to the intermediate feature is similar to that for determining the binary upper limit and the binary lower limit corresponding to the first weight parameter in the embodiment shown in FIG. 6. Details are not described herein again in this embodiment of this application.

It should be noted that when the electronic device uses the intermediate feature in the convolutional neural network as the to-be-quantized data, the electronic device may perform binary quantization on the intermediate feature based on the binary quantizer expressed as formula (8), to obtain a corresponding binary quantization result. A specific quantization process is similar to the process of quantizing the first weight parameter in the embodiment shown in FIG. 6. Details are not described herein again in this embodiment of this application.

For example, FIG. 8 is a diagram of a binary quantization result of an intermediate feature according to an embodiment of this application. As shown in FIG. 8, row (a) shows an image of an actual intermediate feature, row (b) shows a result obtained after binary quantization is performed on the intermediate feature by using a sign function, and row (c) shows a result obtained after binary quantization is performed on the intermediate feature by using the binary quantization method provided in embodiments of this application. It can be learned from FIG. 8 that the binary quantization method provided in embodiments of this application can provide richer texture features than a previous binary quantization method, to improve an expression capability of a neural network and ensure precision of the neural network.

It should be understood that in embodiments of this application, after performing binary quantization on the first weight parameter and/or the intermediate feature in the convolutional neural network, the electronic device obtains a binarized neural network corresponding to the convolutional neural network.

Because the learnable offset and scaling factor corresponding to the intermediate feature are introduced into the convolutional neural network, the scaling factor and the offset are adjusted with a loss function in the process of training the convolutional neural network, to adaptively learn a distribution of the intermediate feature in the convolutional neural network. The following describes in detail a specific adjustment method with reference to related accompanying drawings of a neural network training method provided in embodiments of this application.

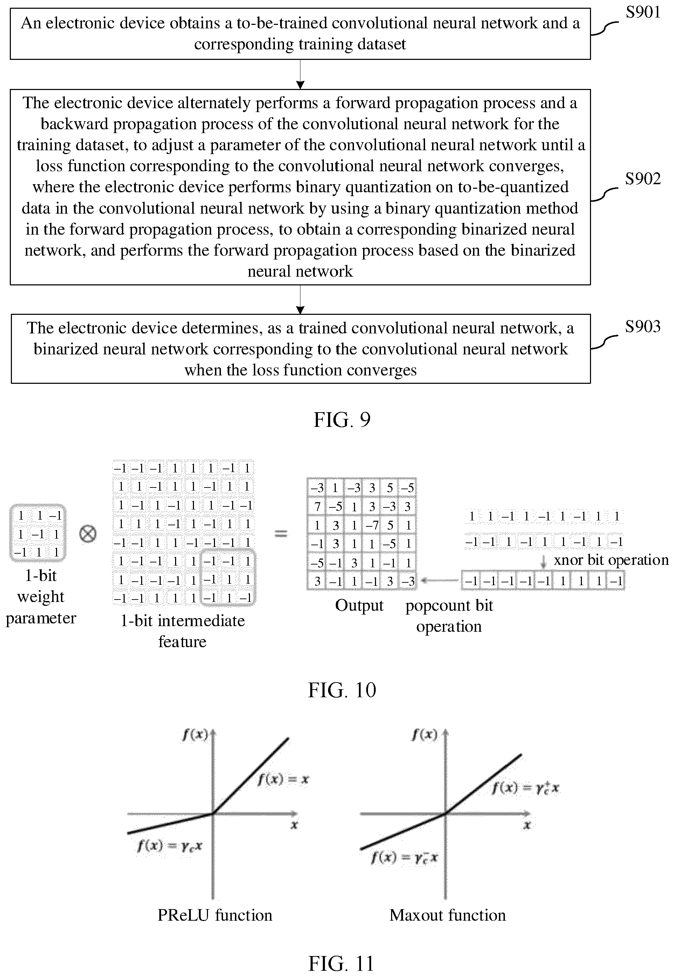

FIG. 9 is a schematic flowchart of a neural network training method according to an embodiment of this application. The method may be performed by the processor 410 in the electronic device 400. As shown in FIG. 9, the method may include steps S901 to S903.

S901: An electronic device obtains a to-be-trained convolutional neural network (used as an instance of a neural network) and a corresponding training dataset.

In embodiments of this application, when training a binarized neural network corresponding to a convolutional neural network, the electronic device needs to first construct an initial convolutional neural network as the to-be-trained convolutional neural network. It should be understood that the convolutional neural network is a floating-point neural network, and all types of data in the convolutional neural network are floating-point data.

In a specific implementation process, the electronic device also needs to first obtain the training dataset. Based on an actual application scenario, the training dataset may be data of different types. For example, in an image classification scenario or object detection scenario, the training dataset may include but is not limited to an image training dataset. When the training dataset is an image training dataset, an image in the image training dataset may be an image captured in real time by using an intelligent terminal device, or an image obtained in advance and stored in a preset memory. In addition, the image may be a three-channel RGB image or a singlechannel grayscale image. Cropping, scaling, or the like may be further performed on the image to obtain a final image training dataset.

S902: The electronic device alternately performs a forward propagation process and a backward propagation process of the convolutional neural network for the training dataset, to adjust a parameter of the convolutional neural network until a loss function corresponding to the convolutional neural network converges.

In embodiments of this application, in a model training process, the electronic device updates a weight of the to-be-trained convolutional neural network through a plurality of iterative calculations. Each iterative calculation includes one forward propagation process and one backward propagation process. The parameter of the convolutional neural network may be updated by using a gradient of the backward propagation process. Forward propagation means that intermediate features of layers in the neural network are sequentially calculated in a sequence from an input layer to an output layer of the neural network. The intermediate features may be output values of the layers in the neural network. Backward propagation means that intermediate features of the layers in the neural network and derivatives of the loss function for parameters are sequentially calculated in a sequence from the output layer to the input layer of the neural network. The intermediate variables may be output values of the layers in the neural network.

In embodiments of this application, the electronic device may perform binary quantization on to-be-quantized data in the convolutional neural network by using the binary quantization method shown in FIG. 6 in the forward propagation process, to obtain a corresponding binarized neural network, and perform the forward propagation process based on the binarized neural network.

It should be noted that in embodiments of this application, binary quantization may be performed on only a weight parameter in the convolutional neural network, only an intermediate feature in the convolutional neural network, or both the weight parameter in the convolutional neural network and the intermediate feature in the convolutional neural network. In actual application, content on which binary quantization is performed is not specifically limited in embodiments of this application.

Specifically, the to-be-quantized data includes a first weight parameter in the convolutional neural network. The first weight parameter indicates one or more weight parameters in the convolutional neural network. In other words, the first weight parameter may be a single weight parameter, a plurality of weight parameters, or all weight parameters. This is not specifically limited in embodiments of this application. In embodiments of this application, for ease of description, it is assumed that the first weight parameter is all weight parameters of each convolutional layer in the convolutional neural network.

In other words, in the forward propagation process, the electronic device may perform binary quantization on the weight parameter w of each convolutional layer in the convolutional neural network by using the binary quantization method shown in FIG. 6, to obtain a corresponding binary weight parameter $w_b$. Then, the electronic device inputs, into the to-be-trained convolutional neural network, the binary weight parameter $w_b$ of each convolutional layer obtained through binary quantization. The electronic device may perform the forward propagation process by using the binary weight parameter $w_b$ of each convolutional layer obtained through binary quantization. For specific content of performing binary quantization on the weight parameter by the electronic device, refer to related descriptions in the embodiment shown in FIG. 6. Details are not described herein again in this embodiment of this application.

In the foregoing process, binary quantization is performed only on the weight parameter in the convolutional neural network. To obtain a more thorough binarized neural network, binary quantization may be further performed on the intermediate feature in the convolutional neural network in the forward propagation process, so that all input data of the convolutional neural network is binarized.

Specifically, the to-be-quantized data further includes an intermediate feature in the convolutional neural network. The intermediate feature may be input data of one or more neural network layers in the convolutional neural network. For example, the intermediate feature may be input data of each convolutional layer in the convolutional neural network.

In other words, in the forward propagation process, the electronic device may perform binary quantization on the intermediate feature a of each convolutional layer in the convolutional neural network by using the binary quantization method shown in FIG. 6, to obtain a corresponding binary intermediate feature $a_b$. Then, the electronic device inputs, into the to-be-trained convolutional neural network, the binary intermediate feature $a_b$ of each convolutional layer obtained through binary quantization. The electronic device may perform the forward propagation process by using the binary intermediate feature $a_b$ of each convolutional layer obtained through binary quantization. For specific content of performing binary quantization on the intermediate feature by the electronic device, refer to related descriptions in the embodiment shown in FIG. 6. Details are not described herein again in this embodiment of this application.

It should be understood that in embodiments of this application, the binarized neural network obtained through binary quantization may still replace floating-point multiplication and summation operations in a floating-point neural network with lightweight xnor and popcount bit operations, respectively. This can achieve dozens of times of inference acceleration and memory saving.

For example, after performing binary quantization on the first weight parameter w and the intermediate feature a of the ith convolutional layer in the convolutional neural network, the electronic device may perform a convolutional operation in the convolutional model of the ith convolutional layer based on the binary weight parameter $w_b$ and the binary intermediate feature $a_b$ obtained through quantization, to obtain a corresponding convolutional operation result.

Specifically, the convolutional operation is as follows:

$$c = Conv(a_b, w_b)$$
$$= Conv\left(g\left(\frac{a - z_a}{s_a}\right) \times s_a + z_a, g\left(\frac{w - z_w}{s_w}\right) \times s_w + z_w\right)$$

$$b_a = g\left(\frac{a-z_a}{s_a}\right), \ b_a \in \{-1, +1\}, \ b_w = g\left(\frac{w-z_w}{s_w}\right), \text{ and } \ b_w \in \{-1, +1\}$$

are defined.

Therefore, the foregoing convolutional operation may be rewritten as follows:

$$c = Conv(b_a \times s_a + z_a, b_w \times s_w + z_w)$$
$$= s_a s_w Conv(b_a, b_w) + s_a z_w Conv(b_a, I) + s_w z_a Conv(I, b_w) + z_a z_w$$
$$= s_a s_w (b_a \odot b_w) + s_a z_w \sum b_a + s_w z_a \sum b_w + z_a z_w$$

$\odot$ represents a Hadamard product, indicating multiplication of elements at corresponding positions. Therefore, the foregoing convolutional operation may be split into four items that are added. An accelerated operation may be performed on the first item through the xnor and popcount bit operations. The summation operation of the second item may be replaced by the popcount bit operation. The third item and the fourth item are fixed after neural network training ends, and may be calculated in advance before forward inference, without involving extra calculation.

For example, FIG. 10 is a diagram of an accelerated operation through bit operations according to an embodiment of this application. When calculating a Hadamard product of a binarily quantized 1-bit weight parameter and 1-bit intermediate feature, the electronic device may perform an accelerated operation through xnor and popcount bit operations. As shown in FIG. 10, when calculating the last eigenvalue, the electronic device first performs an xnor bit operation on the 1-bit weight parameter and feature data in the last receptive field of the 1-bit intermediate feature, to obtain a corresponding operation result. An operation process is as follows:

$$\begin{bmatrix} 1 & 1 & -1 & 1 & -1 & 1 & -1 & 1 & 1 \\ -1 & -1 & 1 & -1 & 1 & 1 & -1 & 1 & -1 \end{bmatrix}$$
$$\xrightarrow{xnor} \begin{bmatrix} -1 & -1 & -1 & -1 & -1 & 1 & 1 & 1 & -1 \end{bmatrix}$$

Then, the electronic device performs a popcount bit operation on the operation result, to obtain the last eigenvalue -3.

It should be understood that if the binary quantization method provided in embodiments of this application is used, when a convolutional operation is performed in the forward propagation process, the convolutional operation may be split into a form of adding the foregoing four items. This is essentially different from a conventional binary quantization method, and is extremely helpful for infringement discovery.

It should be understood that in the binary quantization method provided in embodiments of this application, for a convolutional operation process, xnor and popcount bit operations may still be used to perform an accelerated operation on any binary value through simple linear transformation. Increases in an operation quantity and a parameter quantity are ignorable compared with a total computation amount and parameter quantity of a model, but a performance difference between the binarized neural network obtained through binary quantization and a full-precision neural network can be further reduced.

In embodiments of this application, the loss function is used to indicate a similarity between an output result of the binarized neural network obtained through binary quantization and a label of input data. For example, if the similarity between the output result and the label of the input data is small, a function value of the loss function is large. If the similarity between the output result and the label of the input data is large, the function value of the loss function is small. In the backward propagation process, the electronic device may adjust each parameter in the to-be-trained convolutional neural network by using a gradient descent algorithm based on the loss function, so that the electronic device can correctly learn a rule in the input data.

In an embodiment, considering that both the binary lower limit and the binary upper limit may be positive numbers in the binary quantization method provided in embodiments of this application, nonlinear effect of a conventional nonlinear function is weakened. To further enhance a nonlinear/expression capability of the network, in embodiments of this application, a Maxout function is used as an activation function in the convolutional neural network, to further enhance an information flow. The Maxout function is expressed as follows:

$$f_c(x) = \begin{cases} \gamma_c^+ x, & x \geq 0 \\ \gamma_c^- x, & x < 0 \end{cases}$$

c represents a channel index. $\gamma_c^+$ and $\gamma_c^-$ are learnable scaling factors. As shown in FIG. 11, as a conventional nonlinear function, a PReLU function focuses on only a nonlinear change of a negative semi-axis. However, a learnable parameter is added to each of a positive semi-axis and a negative semi-axis of the Maxout function, so that the Maxout function has a stronger nonlinear capability. This can further enhance a feature learning capability of the network.

In actual application, the scaling factors $\gamma_c^+$ and $\gamma_c^-$ in the Maxout function only need to be initialized. In a model training process of the convolutional neural network, the scaling factors $\gamma_c^+$ and $\gamma_c^-$ are updated with the loss function. For example, the scaling factor $\gamma_c^-$ of the negative semi-axis and the scaling factor $\gamma_c^+$ of the positive semi-axis may be initialized as 0.25 and 1, respectively.

Specifically, in the backward propagation process, the electronic device may determine a first gradient of the loss function for a parameter in the Maxout function, and adjust the parameter in the Maxout function based on the first gradient. The first gradient is a first-order gradient of the loss function for the scaling factor $\gamma_c^+$ or $\gamma_c^-$ in the Maxout function in the convolutional neural network. The electronic device updates the scaling factor $\gamma_c^+$ or $\gamma_c^-$ in the Maxout function based on the first gradient.

It should be noted that in some embodiments, the convolutional neural network may alternatively use a conventional activation function as a nonlinear function, including but not limited to a sigmoid function, a tanh function, and a PReLU function. A type of the activation function is not limited in embodiments of this application.

Specifically, the electronic device may further determine, based on the first gradient in the backward propagation process, a second gradient of the loss function for each weight parameter and a third gradient of the loss function for a quantization parameter corresponding to the intermediate feature. The electronic device may adjust each weight parameter (namely, a floating-point weight parameter) in the convolutional neural network based on the second gradient and the quantization parameter (namely, a floating-point quantization parameter) corresponding to the intermediate feature in the convolutional neural network based on the third gradient.

The second gradient is a first-order gradient of the loss function for the weight parameter w in the convolutional neural network. Specifically, when the gradient is calculated in the backward propagation process, the gradient for the weight parameter w is as follows:

$$\frac{\partial \mathcal{L}}{\partial w} = \frac{\partial \mathcal{L}}{\partial w_b}\frac{\partial w_b}{\partial w} = \frac{\partial \mathcal{L}}{\partial w_b}\frac{\partial \mathcal{B}(\mathrm{w})}{\partial w} = \frac{\partial \mathcal{L}}{\partial \mathcal{B}(\mathrm{w})}\mathrm{g}'(\frac{w - z_w}{s_w})$$

$\mathcal{L}$ represents the loss function. w represents the weight parameter.

The third gradient is a first-order gradient of the loss function for the quantization parameter corresponding to the intermediate feature in the convolutional neural network. Specifically, when the gradient is calculated in the backward propagation process, the gradient for the quantization parameter corresponding to the intermediate feature is as follows:

$$\frac{\partial \mathcal{L}}{\partial s} = \frac{\partial \mathcal{L}}{\partial a_b}\frac{\partial a_b}{\partial s} = \frac{\partial \mathcal{L}}{\partial a_b}\frac{\partial \mathcal{B}(\mathrm{a})}{\partial s} = \frac{\partial \mathcal{L}}{\partial a_b}\left(\mathrm{g}\left(\frac{a - z_a}{s_a}\right) - \frac{\mathrm{a}}{\mathrm{s}}\mathrm{g}'\left(\frac{a - z_a}{s_a}\right)\right)$$

$$\frac{\partial \mathcal{L}}{\partial z} = \frac{\partial \mathcal{L}}{\partial a_b}\frac{\partial a_b}{\partial z} = \frac{\partial \mathcal{L}}{\partial a_b}\frac{\partial \mathcal{B}(\mathrm{a})}{\partial z} = \frac{\partial \mathcal{L}}{\partial a_b}(1 - \mathrm{g}'(\frac{a - z_a}{s_a}))$$

$\mathcal{L}$ represents the loss function. s represents a scaling factor corresponding to the intermediate feature. z represents an offset corresponding to the intermediate feature.

It should be noted that in the model training process, the electronic device needs to reserve the weight parameter of each neural network layer in the convolutional neural network. In the backward propagation process, the electronic device updates the weight parameter of each neural network layer in the convolutional neural network based on the corresponding gradient.

In actual application, because an activation layer in the convolutional neural network is located after the convolutional layer, based on a chain rule, both the second gradient of the loss function for each weight parameter and the third gradient of the loss function for the quantization parameter corresponding to the intermediate feature may be calculated based on the first gradient for the parameter in the corresponding activation function. For a specific calculation process, refer to related descriptions of the gradient descent algorithm. Details are not described herein in embodiments of this application.

S903: The electronic device determines, as a trained convolutional neural network, a binarized neural network corresponding to the convolutional neural network when the loss function converges.

In embodiments of this application, after training is completed, the electronic device may use a weight parameter of each neural network layer obtained by performing binary quantization in the last forward propagation process as a weight parameter of each neural network layer obtained after training, and a quantization parameter corresponding to the intermediate feature of each neural network layer in the last forward propagation process as a quantization parameter corresponding to the intermediate feature and obtained after training. In this way, a trained binarized neural network is obtained.

It should be understood that in embodiments of this application, the trained binarized neural network may be deployed in a product such as a cloud product, a terminal device, or a monitoring device, and may be specifically deployed on a computing node of a related device. Software modification can significantly reduce algorithm complexity, to reduce a demand for power consumption, memory, and other computing resources.

It should be understood that "first", "second", "target", and the like used in embodiments of this application are merely for differentiation and description, but cannot be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The following analyzes computational complexity of the method provided in embodiments of this application.

Based on an analysis manner in the paper "XNOR-Net: ImageNet Classification Using Binary Convolutional Neural Networks", formulas for calculating computation amounts (OPs) of DoReFa-Net and a binarized neural network provided in embodiments of this application may be determined as follows:

$$OPs^{pre} = \frac{BOPs^{pre}}{64} + FLOPs^{pre}$$

$$= \frac{ic \times oc \times w \times h \times ow \times oh}{64} + oc \times ow \times oh$$

$$OPs^{adabin} = \frac{BOPs^{adabin}}{64} + FLOPs^{adabin}$$

$$= \frac{(ic \times oc \times w \times h \times ow \times oh + oc \times ow \times oh)}{64} + 2oc \times ow \times oh$$

OPs$^{pre}$ represents the computation amount of DoReFa-Net. BOPs$^{pre}$ represents a binary computation amount of DoReFa-Net. FLOPs$^{pre}$ represents a full-precision computation amount of DoReFa-Net. OPs$^{adabin}$ represents the computation amount of the binarized neural network provided in embodiments of this application. BOPs$^{adabin}$ represents a binary computation amount of the binarized neural network provided in embodiments of this application. FLOPs$^{adabin}$ represents a full-precision computation amount of the binarized neural network provided in embodiments of this application. ic and oc represent quantities of input and output channels of convolution, respectively. h and w represent a length and width of a convolution kernel, respectively. oh and ow represent a length and width of an output feature map, respectively.

Similarly, formulas for calculating parameter quantities (Params) of DoReFa-Net and the binarized neural network provided in embodiments of this application may be further determined as follows:

$$Params^{pre} = ic \times oc \times w \times h + 32 \times oc$$

$$Params^{adabin} = ic \times oc \times w \times h + 2 \times 32 \times oc + 2$$

Params$^{pre}$ represents the parameter quantity of DoReFa-Net. Params$^{adabin}$ represents the parameter quantity of the binarized neural network provided in embodiments of this application. ic and oc represent quantities of input and output channels of convolution, respectively. h and w represent a length and width of a convolution kernel, respectively. oh and ow represent a length and width of an output feature map, respectively.

It is assumed that hyperparameters are fixed as ic=oc=256, h=w=3, and ow=oh=14, so that comparison results of computational complexity shown in Table 1 may be obtained.

Table 1 Comparison results of computational complexity of different binarized neural networks

| Method | Binary computation amount (M) | Full-precision computation amount (M) | Computation amount (M) | Parameter quantity (Mbit) | Acceleration | Memory saving |
|---|---|---|---|---|---|---|
| Full-precision neural network | 0 | 115.61 | 115.61 | 18.88 | 1× | 1× |
| DoReFa-Net | 115.61 | 0.05 | 1.85 | 0.598 | 62.46x | 32x |
| Binarized neural network in embodiments of this application | 115.65 | 0.1 | 1.9 | 0.606 | 60.85x | 31x |

It can be learned from Table 1 that, compared with DoReFa-Net, the binary quantization method provided in embodiments of this application increases an operation quantity only by 2.74% and a parameter quantity only by 1.37%, which are almost negligible. In addition, 60.85 times of acceleration and 31 times of memory saving can be achieved theoretically.

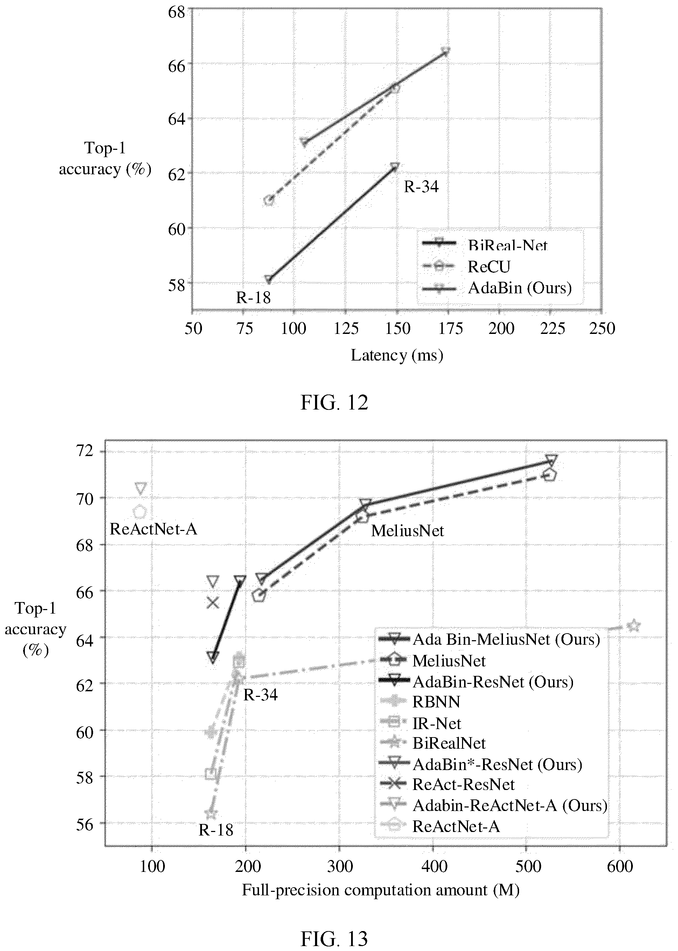

The binarized neural network provided in embodiments of this application and conventional binarized neural networks BiReal-Net and ReCU are applied to a Bolt inference platform for speed testing, to obtain a comparison diagram of speed testing results obtained through Bolt in FIG. 12. BiReal-Net represents a model inference time and top-1 accuracy of the BiReal-Net network applied to neural network models with different sizes. ReCU represents a model inference time and top-1 accuracy of the ReCU network applied to neural network models with different sizes. AdaBin represents a model inference time and top-1 accuracy of the binarized neural network in embodiments of this application applied to neural network models with different sizes. It can be learned from FIG. 12 that the binary quantization method provided in embodiments of this application significantly improves accuracy of the binarized neural network with a small increase in latency.

The following analyzes performance of the method provided in embodiments of this application.

The binary quantization method provided in embodiments of this application and existing binary quantization methods are applied to an image classification task and an object detection task, to obtain recognition accuracy on an image classification dataset and an object detection dataset. **In** this way, performance of the binary quantization method provided in embodiments of this application is compared with that of the existing binary quantization methods for analysis.

Specifically, the binary quantization method provided in embodiments of this application and the existing binary quantization methods are applied to a public dataset CIFAR-10 for the image classification task. Comparison results of classification accuracy shown in Table 2 may be obtained.

Table 2 Classification accuracy of various binary quantization methods on the public dataset CIFAR-10

| Model | Binary quantization method | Bit quantity of a weight/intermediate feature | Accuracy (%) |
|---|---|---|---|
| ResNet-18 | Full precision | 32/32 | 93.0 |
| | RAD | 1/1 | 90.5 |
| | IR-Net | | 91.5 |
| | RBNN | | 92.2 |
| | This application | | 92.9 |

(continued)

| Model | Binary quantization method | Bit quantity of a weight/intermediate feature | Accuracy (%) |
|---|---|---|---|
| ResNet-20 | Full precision | 32/32 | 91.7 |
| | DoReFa | 1/1 | 79.3 |
| | DSQ | | 84.1 |
| | IR-Net | | 86.5 |
| | RBNN | | 87.8 |
| | This application | | 87.9 |
| | DoReFa | 1/32 | 90.0 |
| | LQ-Net | | 90.1 |
| | DSQ | | 90.2 |
| | IR-Net | | 90.8 |
| | This application | | 91.0 |
| VGG-Small | Full precision | 32/32 | 94.1 |
| | LAB | 1/1 | 87.7 |
| | XNOR | | 89.8 |
| | BNN | | 89.9 |
| | RAD | | 90.0 |
| | IR-Net | | 90.4 |
| | RBNN | | 91.3 |
| | This application | | 91.9 |

It can be learned from Table 2 that for the image classification task, when the weight parameter has 1 bit and the intermediate feature has 1 bit or 32 bits, the binary quantization method provided in embodiments of this application has optimal classification accuracy.

Specifically, the binary quantization method provided in embodiments of this application and the existing binary quantization methods are applied to a public dataset ImageNet for the image classification task. Comparison results of classification accuracy shown in Table 3 and comparison results of top-1 accuracy shown in FIG. 13 may be obtained.

Table 3 Classification accuracy of various binary quantization methods on the public dataset ImageNet

| Model | Binary quantization method | Bit quantity of a weight/intermediate feature | Top-1 accuracy (%) | Top-5 accuracy (%) |
|---|---|---|---|---|
| AlexNet | Full precision | 32/32 | 56.6 | 80.0 |
| | BNN | 1/1 | 27.9 | 50.4 |
| | DoReFa | | 43.6 | - |
| | XNOR | | 44.2 | 69.2 |
| | SiBNN | | 50.5 | 74.6 |
| | This application | | 53.9 | 77.6 |
| ResNet-18 | Full precision | 32/32 | 69.6 | 89.2 |
| | BNN | 1/1 | 42.2 | - |

(continued)

| Model | Binary quantization method | Bit quantity of a weight/intermediate feature | Top-1 accuracy (%) | Top-5 accuracy (%) |
|---|---|---|---|---|
| | ABC-Net | | 42.7 | 67.7 |
| | XNOR | | 51.2 | 73.2 |
| | BNN+ | | 53.0 | 72.6 |
| | Bi-Real | | 56.4 | 79.5 |
| | XNOR++ | | 57.1 | 79.9 |
| | IR-Net | | 58.1 | 80.0 |
| | SiBNN | | 59.7 | 81.8 |
| | RBNN | | 59.9 | 81.9 |
| | This application | | 63.1 | 84.3 |
| | SQBWN | | 58.4 | 81.6 |
| | BWN | | 60.8 | 83.0 |
| | HWGQ | 1/32 | 61.3 | 83.2 |
| | BWHN | | 64.3 | 85.9 |
| | IR-Net | | 66.5 | 86.8 |
| | This application | | 67.2 | 87.1 |
| ResNet-34 | Full precision | 32/32 | 73.3 | 91.3 |
| | ABC-Net | | 52.4 | 76.5 |
| | Bi-Real | | 62.2 | 83.9 |
| | IR-Net | 1/1 | 62.9 | 84.1 |
| | SiBNN | | 63.3 | 84.4 |
| | RBNN | | 63.1 | 84.4 |
| | This application | | 66.4 | 86.6 |
| | IR-Net | 1/32 | 70.4 | 89.5 |
| | This application | | 71.0 | 89.6 |

It can be learned from Table 3 that for the image classification task, when the weight parameter has 1 bit and the intermediate feature has 1 bit or 32 bits, the binary quantization method provided in embodiments of this application has optimal top-1 accuracy and top-5 accuracy.

FIG. 13 is a diagram of top-1 accuracy comparison between the binarized neural network provided in embodiments of this application and conventional binarized neural networks applied to neural network models with different sizes. It can be learned from FIG. 13 that when the binary quantization method provided in embodiments of this application is applied to neural network models with different sizes, obtained binarized neural networks have optimal top-1 accuracy.

Specifically, the binary quantization method provided in embodiments of this application and the existing binary quantization methods are applied to a single-shot multibox detector (Single Shot MultiBox Detector, SSD) model and a public dataset VOC for the object detection task. Comparison results of object detection accuracy shown in Table 4 may be obtained.

Table 4 Object detection accuracy of various binary quantization methods on the SSD model and the public dataset VOC

| Binary quantization method | Bit quantity of a weight/intermediate feature | Parameter quantity (M) | Computation amount (M) | Average accuracy (mAP) |
|---|---|---|---|---|
| Full precision | 32/32 | 100.28 | 31750 | 72.4 |

(continued)

| Binary quantization method | Bit quantity of a weight/intermediate feature | Parameter quantity (M) | Computation amount (M) | Average accuracy (mAP) |
|---|---|---|---|---|
| TWN | 2/32 | 24.54 | 8531 | 67.8 |
| DoReFa | 4/4 | 29.58 | 4661 | 69.2 |
| BNN | | 22.06 | 1275 | 42.0 |
| XNOR | | 22.16 | 1279 | 50.2 |
| BiDet | 1/1 | 21.88 | 1277 | 66.0 |
| AutoBiDet | | 21.88 | 1277 | 67.5 |
| BiReal-Net | | 21.88 | 1277 | 63.8 |
| This application | | 22.47 | 1282 | 69.4 |

It can be learned from Table 4 that for the object detection task, detection accuracy of the binarized neural network obtained by using the binary quantization method provided in embodiments of this application exceeds detection accuracy of both a general binarized neural network and a solution BiDet specially optimized for the object detection field. This indicates that the binary quantization method provided in embodiments of this application can be extended to more complex tasks.

It can be learned from the foregoing analysis that the method provided in embodiments of this application can effectively improve precision of the binarized neural network, and achieve excellent performance in a plurality of different tasks (including large-scale image classification tasks and object detection tasks).

In addition, an ablation study is conducted on the binary quantization method provided in embodiments of this application. Starting from a common binarized neural network (namely, a binarized neural network in which a weight parameter is binarily quantized into $\{-\alpha, +\alpha\}$, an intermediate feature is binarily quantized into $\{-1, +1\}$, and a PReLU function is used as an activation function), the binary quantization method provided in embodiments of this application is gradually used to optimize the weight parameter, perform adaptive binary quantization on the intermediate feature, and introduce a Maxout technology. In addition, a scaling factor in a Maxout function is gradually increased. Accuracy comparison results shown in Table 5 and Table 6 may be obtained.

Table 5 Accuracy in the ablation study on the binary quantization method in embodiments of this application

| Quantized weight | Quantized intermediate feature | Nonlinear function | Accuracy (%) |
|---|---|---|---|
| $\{-\alpha, +\alpha\}$ | $\{-1, +1\}$ | PReLU | 85.7 |
| $\{w_{b1}, w_{b2}\}$ | $\{-1, +1\}$ | PReLU | 86.3 |
| $\{-\alpha, +\alpha\}$ | $\{a_{b1}, a_{b2}\}$ | PReLU | 87.3 |
| $\{w_{b1}, w_{b2}\}$ | $\{a_{b1}, a_{b2}\}$ | PReLU | 87.7 |
| $\{w_{b1}, w_{b2}\}$* | $\{a_{b1}, a_{b2}\}$ | Maxout | 86.7 |
| $\{w_{b1}, w_{b2}\}$ | $\{a_{b1}, a_{b2}\}$ | Maxout | 88.2 |

Table 6 Accuracy in the ablation study on the scaling factor

| Scaling factor | Top-1 accuracy (%) | Top-5 accuracy (%) |
|---|---|---|
| None | 53.2 | 77.2 |
| $\gamma_c^+$ | 62.8 | 83.9 |
| $\gamma_c^-$ | 62.9 | 84.1 |
| $\gamma_c^+, \gamma_c^-$ | 63.1 | 84.3 |

Specifically, $\{w_{b1}, w_{b2}\}$* in Table 5 indicates that binary quantization is performed on the weight parameter by using a binary quantization method for the intermediate feature, to obtain a corresponding binary weight $\{w_{b1}, w_{b2}\}$. It can be learned from Table 5 and Table 6 that the binary quantization method provided in embodiments of this application can significantly improve an expression capability of the binarized neural network, to improve accuracy of the binarized neural network.

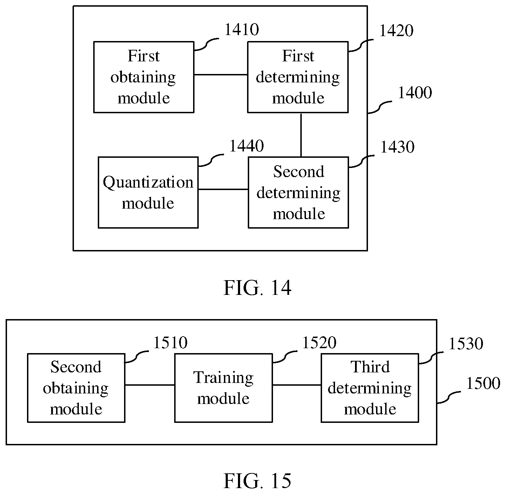

Embodiments of this application further provide a binary quantization apparatus, configured to perform the foregoing binary quantization method. Specifically, as shown in FIG. 14, the binary quantization apparatus 1400 may include:

a first obtaining module 1410, configured to obtain to-be-quantized data in a neural network;
a first determining module 1420, configured to determine a quantization parameter corresponding to the to-be-quantized data, where the quantization parameter includes a scaling factor and an offset;
a second determining module 1430, configured to determine, based on the scaling factor and the offset, a binary upper limit and a binary lower limit corresponding to the to-be-quantized data; and
a quantization module 1440, configured to perform binary quantization on the to-be-quantized data based on the scaling factor and the offset, to quantize the to-be-quantized data into the binary upper limit or the binary lower limit.

Embodiments of this application further provide a neural network training apparatus, configured to perform the foregoing neural network training method. Specifically, as shown in FIG. 15, the neural network training apparatus 1500 may include:

a second obtaining module 1510, configured to obtain a to-be-trained neural network and a corresponding training dataset;
a training module 1520, configured to alternately perform a forward propagation process and a backward propagation process of the neural network for the training dataset, to adjust a parameter of the neural network until a loss function corresponding to the neural network converges; where
binary quantization is performed on to-be-quantized data in the neural network by using the method shown in FIG. 6 in the foregoing embodiment in the forward propagation process, to obtain a corresponding binarized neural network, and the forward propagation process is performed based on the binarized neural network; and
a third determining module 1530, configured to determine, as a trained neural network, a binarized neural network corresponding to the neural network when the loss function converges.

In some embodiments, the neural network uses a Maxout function as an activation function. The neural network training apparatus 1500 may further include:
a parameter adjustment module, configured to determine, in the backward propagation process, a first gradient of the loss function for a parameter in the Maxout function, and adjust the parameter in the Maxout function based on the first gradient.

In some embodiments, the to-be-quantized data includes weight parameters and an intermediate feature in the neural network. The parameter adjustment module is further configured to determine, based on the first gradient in the backward propagation process, a second gradient of the loss function for each weight parameter and a third gradient of the loss function for a quantization parameter corresponding to the intermediate feature; and adjust each weight parameter in the neural network based on the second gradient and the quantization parameter corresponding to the intermediate feature in the neural network based on the third gradient.

It should be noted that when the apparatuses provided in the foregoing embodiments implement functions of the apparatuses, division into the foregoing functional modules is merely used as an example for description. In actual application, the foregoing functions may be allocated to different functional modules for implementation as required, that is, an internal structure of a device is divided into different functional modules, to implement all or some of the foregoing functions. In addition, the apparatuses provided in the foregoing embodiments and the corresponding method embodiments belong to a same concept. For a specific implementation process, refer to the corresponding method embodiments. Details are not described herein again.

Embodiments of this application further provide an electronic device, including:

a memory, configured to store instructions for execution by one or more processors of the electronic device; and
the processor, where when the processor executes the instructions in the memory, the electronic device is enabled to perform the methods shown in FIG. 6 to FIG. 11 in the foregoing embodiments.

Embodiments of this application further provide a computer-readable storage medium. The computer-readable storage medium stores instructions. When the instructions are run by a processor, the processor is enabled to perform the methods shown in FIG. 6 to FIG. 11 in the foregoing embodiments.

This application further provides a computer program product including instructions. When the computer program product runs on an electronic device, a processor is enabled to perform the methods shown in FIG. 6 to FIG. 11 in the foregoing embodiments.

The embodiments disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system that has a processor such as a digital signal processor (Digital Signal Processor, DSP), a microcontroller, an application-specific integrated circuit (Application Specific Integrated Circuit, ASIC), or a microprocessor.

The program code may be implemented in a high-level programming language or an objectoriented programming language to communicate with the processing system, including but not limited to OpenCL, C, C++, and Java. However, for a programming language such as C++ or Java, because storage is converted, application of a data processing method in embodiments of this application may be different. A person skilled in the art may perform conversion based on a specific high-level programming language without departing from the scope of embodiments of this application.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine-readable (for example, computer-readable) form. The machine-readable medium includes but is not limited to a floppy disk, a compact disc, an optical disc, a magneto-optical disc, a read-only memory (Read-Only Memory, ROM), a compact disc read-only memory (CD-ROM), a random access memory (Random Access Memory, RAM), an erasable programmable read-only memory (Erasable Programmable Read-Only Memory, EPROM), an electrically erasable programmable read-only memory (Electrically Erasable Programmable Read-Only Memory, EEPROM), a magnetic or an optical card, a flash memory, or a tangible machine-readable memory that is configured to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine-readable (for example, computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments. In some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important. A combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in the examples and specification of this patent, relational terms such as first and second are merely used to distinguish one entity or operation from another, and do not necessarily require or imply any such actual relationship or order between these entities or operations. Moreover, the terms "include", "contain", or any other variants thereof are intended to cover a non-exclusive inclusion, so that a process, a method, an article, or a device that includes a list of elements not only includes those elements but also includes other elements that are not expressly listed, or further includes elements inherent to such a process, method, article, or device. Without more restrictions, the elements defined by the statement "including a ..." do not exclude the existence of other identical elements in the process, method, article, or device including the elements.

Although this application has been illustrated and described with reference to some preferred embodiments of this application, a person of ordinary skill in the art should understand that various changes may be made to this application in form and detail without departing from the spirit and scope of this application.

**Claims**

1. A binary quantization method, applied to an electronic device, wherein the method comprises:

   obtaining to-be-quantized data in a neural network;
   determining a quantization parameter corresponding to the to-be-quantized data, wherein the quantization parameter comprises a scaling factor and an offset;
   determining, based on the scaling factor and the offset, a binary upper limit and a binary lower limit corresponding to the to-be-quantized data; and
   performing binary quantization on the to-be-quantized data based on the scaling factor and the offset, to quantize the to-be-quantized data into the binary upper limit or the binary lower limit.

2. The method according to claim 1, wherein the to-be-quantized data is a first weight parameter in the neural network; and

   the determining a quantization parameter corresponding to the first weight parameter comprises:

   determining a corresponding mean and standard deviation based on data distributions of weight parameters in the neural network;
   using the mean as an offset corresponding to the first weight parameter; and
   determining, based on the standard deviation, a scaling factor corresponding to the first weight parameter.

3. The method according to claim 1, wherein the to-be-quantized data is an intermediate feature in the neural network; and

   an offset and a scaling factor corresponding to the intermediate feature used as the to-be-quantized data are obtained from the neural network.

4. The method according to claim 1, wherein the binary upper limit is a sum of the scaling factor and the offset; and the binary lower limit is a sum of the offset and an opposite number of the scaling factor.

5. The method according to claim 1, wherein the performing binary quantization on the to-be-quantized data based on the scaling factor and the offset comprises:

   calculating a difference between the to-be-quantized data and the offset, and determining a ratio of the difference to the scaling factor;
   comparing the ratio with a preset quantization threshold to obtain a comparison result; and
   converting the to-be-quantized data into the binary upper limit or the binary lower limit based on the comparison result.

6. A neural network training method, applied to an electronic device, wherein the method comprises:

   obtaining a to-be-trained neural network and a corresponding training dataset;
   alternately performing a forward propagation process and a backward propagation process of the neural network for the training dataset, to adjust a parameter of the neural network until a loss function corresponding to the neural network converges; wherein
   binary quantization is performed on to-be-quantized data in the neural network by using the method according to claim 1 in the forward propagation process, to obtain a corresponding binarized neural network, and the forward propagation process is performed based on the binarized neural network; and
   determining, as a trained neural network, a binarized neural network corresponding to the neural network when the loss function converges.

7. The method according to claim 6, wherein the neural network uses a Maxout function as an activation function; and the method further comprises:
   determining, in the backward propagation process, a first gradient of the loss function for a parameter in the Maxout function, and adjusting the parameter in the Maxout function based on the first gradient.

8. The method according to claim 7, wherein the to-be-quantized data comprises weight parameters and an intermediate feature in the neural network; and
   the method further comprises:

determining, based on the first gradient in the backward propagation process, a second gradient of the loss function for each of the weight parameters and a third gradient of the loss function for a quantization parameter corresponding to the intermediate feature; and

adjusting each of the weight parameters in the neural network based on the second gradient and the quantization parameter corresponding to the intermediate feature in the neural network based on the third gradient.

9. An electronic device, comprising:

a memory, configured to store instructions for execution by one or more processors of the electronic device; and the processor, wherein when the processor executes the instructions in the memory, the electronic device is enabled to perform the binary quantization method according to any one of claims 1 to 5 or the neural network training method according to any one of claims 6 to 8.

10. A computer-readable storage medium, wherein the computer-readable storage medium stores instructions, and when the instructions are executed on a computer, the computer is enabled to perform the binary quantization method according to any one of claims 1 to 5 or the neural network training method according to any one of claims 6 to 8.

FIG. 1

FIG. 2

FIG. 3

Electronic device 400

| Mobile communication module [430] | Wireless communication module [420] |
|---|---|

Power module [440]

Interface module [460]

Memory [480]

Button [401]

Processor [410]

Audio module [450]

Camera [470]

Sensor module [490]

Display [402]

FIG. 4

| Application layer | Camera | Calendar | Map | WLAN | Music | Messaging |
|---|---|---|---|---|---|---|
| | Gallery | Phone | Navigation | Bluetooth | Video | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... |

| Kernel layer | Display driver | Camera driver |
|---|---|---|
| | Audio driver | Sensor driver | ... |

FIG. 5

| An electronic device obtains a first weight parameter in a convolutional neural network | S601 |
| The electronic device determines a quantization parameter corresponding to the first weight parameter, where the quantization parameter includes a scaling factor and an offset | S602 |
| The electronic device determines, based on the scaling factor and the offset, a binary upper limit and a binary lower limit corresponding to the first weight parameter | S603 |
| The electronic device performs binary quantization on the first weight parameter based on the scaling factor and the offset, to quantize the first weight parameter into the binary upper limit or the binary lower limit | S604 |

FIG. 6

FIG. 7a

FIG. 7b

FIG. 7c

FIG. 7d

FIG. 8

An electronic device obtains a to-be-trained convolutional neural network and a corresponding training dataset ⟋ S901

The electronic device alternately performs a forward propagation process and a backward propagation process of the convolutional neural network for the training dataset, to adjust a parameter of the convolutional neural network until a loss function corresponding to the convolutional neural network converges, where the electronic device performs binary quantization on to-be-quantized data in the convolutional neural network by using a binary quantization method in the forward propagation process, to obtain a corresponding binarized neural network, and performs the forward propagation process based on the binarized neural network ⟋ S902

The electronic device determines, as a trained convolutional neural network, a binarized neural network corresponding to the convolutional neural network when the loss function converges ⟋ S903

FIG. 9

1-bit weight parameter ⊗ 1-bit intermediate feature = Output  popcount bit operation  xnor bit operation

FIG. 10

$f(x) = x$

$f(x) = \gamma_c x$

PReLU function

$f(x) = \gamma_c^+ x$

$f(x) = \gamma_c^- x$

Maxout function

FIG. 11

FIG. 12

FIG. 13

1410    1420

First obtaining module

First determining module

1400

1440    1430

Quantization module

Second determining module

FIG. 14

1510    1520    1530

Second obtaining module

Training module

Third determining module

1500

FIG. 15

## INTERNATIONAL SEARCH REPORT

| | International application No. |
| --- | --- |
| | **PCT/CN2023/101719** |

### A. CLASSIFICATION OF SUBJECT MATTER

G06N 3/08(2023.01)i

According to International Patent Classification (IPC) or to both national classification and IPC

### B. FIELDS SEARCHED

Minimum documentation searched (classification system followed by classification symbols)

IPC：G06N

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 动态, 自适应, 二值, 均值, 量化, 偏移, 缩放, 神经网络, 权重, 激活, BNN, adabin, reactnet, dynamic, adaptive, binar+, quantizat+, weight, activat+, mean, center, distance

### C. DOCUMENTS CONSIDERED TO BE RELEVANT

| Category* | Citation of document, with indication, where appropriate, of the relevant passages | Relevant to claim No. |
| --- | --- | --- |
| Y | CN 114444686 A (INSPUR (BEIJING) ELECTRONIC INFORMATION INDUSTRY CO., LTD.) 06 May 2022 (2022-05-06) description, paragraphs [0050]-[0108] and [0185]-[0186] | 1, 3, 6-7, 9-10 |
| Y | CN 114283495 A (BEIHANG UNIVERSITY) 05 April 2022 (2022-04-05) description, paragraphs [0018]-[0036] | 1, 3, 6-7, 9-10 |
| A | CN 113191489 A (HUAWEI TECHNOLOGIES CO., LTD.) 30 July 2021 (2021-07-30) entire document | 1-10 |
| A | CN 112686384 A (NANJING UNIVERSITY) 20 April 2021 (2021-04-20) entire document | 1-10 |
| A | US 2022164669 A1 (INTEL CORP.) 26 May 2022 (2022-05-26) entire document | 1-10 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 September 2023** | **13 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101719**

| Patent document cited in search report | | | Publication date (day/month/year) | Patent family member(s) | | | Publication date (day/month/year) |
|---|---|---|---|---|---|---|---|
| CN | 114444686 | A | 06 May 2022 | None | | | |
| CN | 114283495 | A | 05 April 2022 | None | | | |
| CN | 113191489 | A | 30 July 2021 | None | | | |
| CN | 112686384 | A | 20 April 2021 | None | | | |
| US | 2022164669 | A1 | 26 May 2022 | EP | 3980943 | A1 | 13 April 2022 |
| | | | | WO | 2020243922 | A1 | 10 December 2020 |
| | | | | CN | 114730376 | A | 08 July 2022 |

Form PCT/ISA/210 (patent family annex) (July 2022)

REFERENCES CITED IN THE DESCRIPTION

**Patent documents cited in the description**

- CN 202210836913

**Non-patent literature cited in the description**

- **HAOTONG QIN ; RUIHAO GONG.** Forward and Backward Information Retention for Accurate Binary Neural Networks. *CVPR*, 2020

- **ZECHUN LIU ; ZHIQIANG SHEN ; MARIOS SAV-VIDES**. ReActNet: Towards Precise Binary Neural Network with Generalized Activation Functions. *ECCV*, 2020